(19) Europäisches Patentamt
European Patent Office
Office européen des brevets

(11) EP 4 741 085 A1

(12) EUROPEAN PATENT APPLICATION

(43) Date of publication:
**13.05.2026 Bulletin 2026/20**

(21) Application number: **25215367.1**

(22) Date of filing: **12.11.2025**

(51) International Patent Classification (IPC):
***B22F 10/28*** *(2021.01)* ***B22F 10/38*** *(2021.01)*
***B22F 10/85*** *(2021.01)* ***B22F 12/41*** *(2021.01)*
***B22F 12/90*** *(2021.01)* ***B33Y 10/00*** *(2015.01)*
***B33Y 30/00*** *(2015.01)* ***B33Y 50/02*** *(2015.01)*
***G06T 7/00*** *(2017.01)* ***G06T 7/174*** *(2017.01)*
***G06T 7/50*** *(2017.01)* *B33Y 50/00 (2015.01)*
*B29C 64/393 (2017.01)* *B29C 64/153 (2017.01)*

(52) Cooperative Patent Classification (CPC):
(C-Sets available)
**B22F 10/85; B22F 10/28; B22F 10/38; B22F 12/41; B22F 12/90; B33Y 10/00; B33Y 30/00; B33Y 50/02; G06T 7/0004; G06T 7/174; G06T 7/50;**
B29C 64/393; B33Y 50/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.11.2024 JP 2024197760**

(71) Applicant: **Jeol Ltd.**
**Akishima, Tokyo 196-8558 (JP)**

(72) Inventors:
- **TSUTAGAWA, Nari**
  **Tokyo 196-8558 (JP)**
- **KANEKO, Yuhei**
  **Tokyo 196-8558 (JP)**
- **ASANUMA, Yuji**
  **Tokyo 196-8558 (JP)**
- **TSUDA, Takashi**
  **Tokyo 196-8558 (JP)**
- **SUWA, Kento**
  **Tokyo 196-8558 (JP)**
- **OHARA, Shuma**
  **Tokyo 196-8558 (JP)**
- **SHIBATA, Kohei**
  **Tokyo 196-8558 (JP)**

(74) Representative: **Boult Wade Tennant LLP**
**Salisbury Square House**
**8 Salisbury Square**
**London EC4Y 8AP (GB)**

# (54) INFORMATION PROCESSING APPARATUS, DEFECT DETECTION METHOD, AND THREE-DIMENSIONAL POWDER BED FUSION ADDITIVE MANUFACTURING APPARATUS

(57) An information processing apparatus includes a defect detection area setting unit (72) configured to set, on the basis of information input from an input unit (60), an area inside a predetermined amount from a surface of a formed object manufactured by a three-dimensional powder bed fusion additive manufacturing (PBF-AM) apparatus (1) as a defect detection area, and a defect detection unit (74) configured to detect a defect present in the formed object on the basis of layer data obtained for each layer in which the formed object is powder-bed-fusion additively manufactured, to identify a defect detected in the defect detection area as a defect leading to a quality defect, and to output defect information on the identified defect.

EP 4 741 085 A1

(52) Cooperative Patent Classification (CPC): (Cont.)

C-Sets
B22F 2999/00, B22F 10/80, B22F 12/90,
B22F 10/85;
B22F 2999/00, B22F 10/80, B22F 12/90,
B22F 2203/01;
B22F 2999/00, B22F 10/80, B22F 12/90,
B22F 2203/03;
B22F 2999/00, B22F 12/90, B22F 10/38

## Description

BACKGROUND

Technical Field

The present invention relates to an information processing apparatus, a defect detection method, and a three-dimensional powder bed fusion additive manufacturing (PBF-AM) apparatus.

Related Art

In recent years, a three-dimensional powder bed fusion additive manufacturing (PBF-AM) technique in which layers obtained by thinly laying a powder material of metal are layered one by one is in the limelight, and many types of three-dimensional PBF-AM techniques have been developed depending on the material of the powder material and the manufacturing method.

In a building method of a conventional three-dimensional PBF-AM apparatus, for example, a powder material is spread one by one on a base plate installed on the upper surface of a stage. Next, for the powder material spread on the base plate, only a two-dimensional structure portion corresponding to one cross section of a formed object is melted using a heating mechanism including an electron beam or a laser. Then, such layers of powder material are stacked one by one in the height direction (Z direction) to form the formed object. At the time of building each layer of the formed object, a powder bed is formed on the base plate, and thus this building method is also referred to as a powder bed method.

In the formation of a formed object, a powder material cannot be completely melted at the portion where a sintering defect occurs, and unevenness occurs on the surface of the formed object in the middle of forming. Since such unevenness may be defects, in the three-dimensional PBF-AM apparatus, defect detection is performed on the basis of data acquired from the surface of the formed object by performing camera imaging or back scattered electron (BSE) imaging. Camera imaging is, for example, a method of imaging the surface of a formed object using visible light. BSE imaging is a method of imaging the surface of a formed object by detecting backscattered electrons of the electron beam radiated to the surface of the formed object.

Layer data obtained by camera imaging or BSE imaging is displayed on a monitor as an XY cross-sectional view per layer of the formed object in the middle of forming. A user can check the state of the XY cross section immediately after melting of the powder material using the layer data. Furthermore, the user has been able to identify a portion (referred to as a defect candidate) that may become a defect on the basis of the unevenness of the surface of the formed object in the middle of forming. Examples of a defect candidate include an uneven portion generated in a layer, a portion insufficiently melted and formed with a space.

As a technique related to such defect detection, a technique disclosed in Patent Literature 1 is known. Patent Literature 1 discloses that "the determination unit calculates at least one of the height of a convex portion, the total area of the region where the convex portion is generated, and the occupation ratio of the convex portion in a sintered region from the state of the convex portion measured by a surface state measurement unit, and compares the calculated value with a corresponding threshold to determine whether the formation state of a sintered layer is good or poor".

Citation List

Patent Literature

Patent Literature 1: Japanese Laid-open Patent Publication No. 2020-200501

SUMMARY

However, the metal powder is not uniformly melted in any area, and there are areas that are hardly melted cleanly. For example, it is confirmed that an area of several layers immediately above the metal powder is hardly melted cleanly, and defects are likely to occur in this area.

In addition, it may be difficult to clearly determine the boundary portion between the powder bed and the formed object through BSE imaging, and in this boundary portion, a portion that is not a defect may be erroneously determined as a defect. Furthermore, when the surface roughness of the formed object is high, unevenness similar to that in the case where a defect occurs may occur on the surface, and this unevenness may be erroneously determined as a defect.

In addition, it is rare that formed objects manufactured by the three-dimensional PBF-AM apparatus are used as products as they are. For example, in the three-dimensional PBF-AM apparatus, a formed object having a large shape is manufactured, and the surface of the formed object is polished or additionally processed to finish the object into a final product. In a product created in this way, an area called a down skin of several layers from immediately above metal powder and an area called an up skin of an upper layer as described above become a cutting allowance in polishing or additional processing. Therefore, even if a defect occurs in an area serving as a cutting allowance, the defect is irrelevant to the finish of the final product.

In a case where there is such an area where erroneous detection of a defect is likely to occur, an area serving as a cutting allowance, and the like, when defect detection processing is performed without considering these, erroneous detection of a defect and unnecessary defect detection are performed. When a defect is detected, the quality of the formed object may be determined to be poor, or control may be performed to stop manufacturing by the three-dimensional PBF-AM apparatus.

The present disclosure has been made in view of such a situation, and an object thereof is to prevent occurrence of a situation in which a defect is erroneously determined for a formed object having no problem in quality.

An information processing apparatus according to the present invention includes a defect detection area setting unit configured to set, on the basis of information input from an input unit, an area inside a predetermined amount from a surface of a formed object manufactured by a three-dimensional powder bed fusion additive manufacturing (PBF-AM) apparatus as a defect detection area, and a defect detection unit configured to detect a defect present in the formed object on the basis of layer data obtained for each layer in which the formed object is powder-bed-fusion additively manufactured, to identify a defect detected in the defect detection area as a defect leading to a quality defect, and to output defect information on the identified defect.

The above-described information processing apparatus is one aspect of the present invention, and a defect detection method and a three-dimensional PBF-AM apparatus reflecting one aspect of the present invention are also configured similarly to the above-described information processing apparatus.

According to the present invention, it is possible to prevent the occurrence of a situation in which a defect is erroneously determined for a formed object having no quality problem.

Problems, configurations, and effects other than those described above will be clarified by the following description of embodiments.

BRIEF DESCRIPTION OF DRAWINGS

FIG. 1 is a schematic cross-sectional view schematically illustrating a three-dimensional powder bed fusion additive manufacturing (PBF-AM) apparatus according to a first embodiment of the present invention;
FIG. 2 is a block diagram illustrating a configuration example of a control system of the three-dimensional PBF-AM apparatus according to the first embodiment of the present invention;
FIG. 3 is a block diagram illustrating a configuration example of a control block of a PC according to the first embodiment of the present invention;
FIG. 4 is a flowchart illustrating an example of a procedure of defect detection area setting processing according to the first embodiment of the present invention;
FIG. 5 is a diagram illustrating a configuration example of a defect detection area setting screen according to the first embodiment of the present invention;
FIG. 6 is a diagram illustrating an example of an explanation screen of a defect detection internal area according to the first embodiment of the present invention;
FIG. 7 is a diagram illustrating an example of an explanation screen of a defect detection peripheral area according to the first embodiment of the present invention;
FIG. 8 is a flowchart illustrating an example of a procedure of defect detection processing according to example 1 of the first embodiment of the present invention;
FIG. 9 is a flowchart illustrating an example of a procedure of defect candidate identification processing according to example 1 of the first embodiment of the present invention;
FIG. 10 is a perspective view of a formed object according to the first embodiment of the present invention;
FIG. 11 is a diagram illustrating an example of a BSE image of a formed object viewed from above in the Z direction in the middle of PBF-AM according to the first embodiment of the present invention;
FIG. 12 is a diagram illustrating an example of a BSE image in which a defect candidate A generated in an N-th layer is confirmed according to the first embodiment of the present invention;
FIG. 13 is a diagram illustrating an example of a BSE image in which a defect candidate B generated in an (N+1)-th layer is confirmed according to the first embodiment of the present invention;
FIG. 14 is a diagram illustrating an example of a BSE image of the defect candidate A and the defect candidate B confirmed when the N-th layer and the (N+1)-th layer according to the first embodiment of the present invention are superimposed;

FIG. 15 is a diagram illustrating an example of defect candidates A and B having extremely different sizes according to the first embodiment of the present invention;

FIG. 16 is a flowchart illustrating an example of a procedure of defect determination processing according to example 1 of the first embodiment of the present invention;

FIG. 17 is a diagram illustrating an example of defect candidates that span a plurality of layers according to example 2 of the first embodiment of the present invention;

FIG. 18 is a diagram illustrating an example of defect candidates ID assigned to defect candidates integrated by a defect detection unit according to example 2 of the first embodiment of the present invention;

FIG. 19 is a diagram illustrating an example in which lengths in an XY direction and a Z direction of defect candidates integrated by the defect detection unit according to example 2 of the first embodiment of the present invention are measured;

FIG. 20 is a flowchart illustrating an example of a procedure of display control processing according to the first embodiment of the present invention;

FIG. 21 is a flowchart illustrating an example of a procedure of manufacturing control processing according to the first embodiment of the present invention;

FIG. 22 is a diagram illustrating a configuration example of a defect detection area setting screen according to a second embodiment of the present invention;

FIG. 23 is a diagram illustrating a configuration example of a defect detection exclusion area information setting section and a defect detection exclusion laminate number setting section according to the second embodiment of the present invention; and

FIG. 24 is a diagram illustrating a configuration example of a setting confirmation screen of the defect detection exclusion area according to the second embodiment of the present invention.

DETAILED DESCRIPTION

Hereinafter, embodiments of an information processing apparatus, a three-dimensional powder bed fusion additive manufacturing (PBF-AM) apparatus, and a defect detection method according to the present invention will be described with reference to the drawings. Note that the same reference numerals are given to common members in the respective drawings, and redundant description will be omitted.

[1. First Embodiment]

1-1. Configuration of Three-Dimensional PBF-AM Apparatus

First, a three-dimensional PBF-AM apparatus according to a first embodiment of the present invention (hereinafter, referred to as a "present example") will be described with reference to FIG. 1.

FIG. 1 is a schematic cross-sectional view schematically illustrating the three-dimensional PBF-AM apparatus according to the present example. In the following description, in order to clarify the shapes, positional relationship, and the like of respective parts of the three-dimensional PBF-AM apparatus, the left and right direction in FIG. 1 is referred to as an X direction, the depth direction in FIG. 1 is referred to as a Y direction, and the up and down direction in FIG. 1 is referred to as a Z direction. The X direction, the Y direction, and the Z direction are directions orthogonal to each other. The X direction and the Y direction are parallel to the horizontal direction, and the Z direction is parallel to the vertical direction.

The three-dimensional PBF-AM apparatus 1 illustrated in FIG. 1 is an apparatus that radiates an electron beam 15 (an example of a forming beam) to a powder material 32 made of a metal powder such as titanium, copper, or tungsten to melt the powder material 32, and stacks layers in which the powder material 32 has been solidified to form a three-dimensional object.

As illustrated in FIG. 1, the three-dimensional PBF-AM apparatus 1 includes a vacuum chamber 3, a beam radiation device 2 (an example of an electron gun), a powder supply device 16, a build table 18, a build box 20, and a collection box 21. Furthermore, the three-dimensional PBF-AM apparatus 1 includes a build plate 22, an inner base 24, a plate moving device 26, a radiation shield cover 28, an electron shield 30, a camera 42, and a shutter 44. Furthermore, the three-dimensional PBF-AM apparatus 1 includes a plurality of detection units 46 that detect backscattered electrons.

The vacuum chamber 3 is a chamber for creating a vacuum state by evacuating air in the chamber using a vacuum pump (not shown). The inside of the vacuum chamber 3 is maintained in vacuum. Further, the beam radiation device 2 is attached to the vacuum chamber 3.

The beam radiation device 2 is a device that radiates the electron beam 15 to the build plate 22 or a formed surface 32a of a powder layer formed of the powder material 32, and includes an electron gun (an example of a beam radiation unit) and an electron optical system. The formed surface 32a corresponds to the upper surface of the powder layer. The state of the powder layer changes as a three-dimensional PBF-AM process proceeds. Although not illustrated, the beam radiation device 2 includes, as the electron optical system, an electron gun that is a generation source of the electron beam 15, a focusing lens that focuses the electron beam 15 generated by the electron gun, and a deflection lens that deflects the electron beam 15 focused by the focusing lens.

The focusing lens is configured using a focusing coil, and focuses the electron beam 15 by a magnetic field generated by the focusing coil. The deflection lens is configured using a deflection coil, and deflects the electron beam 15 by a magnetic field generated by the deflection coil. Therefore, the electron optical system scans the electron beam 15 according to melting conditions for melting the powder material, and melts the uppermost layer (an example of a powder bed) of the powder material spread on the build plate 22 using the electron beam 15.

The powder supply device 16 (an example of a powder supply system) supplies the powder material 32 onto the build table 18 as an example of a powder material to be a raw material of a formed object 38, and spreads the powder material over the build plate 22 to form a powder layer. The powder supply device 16 includes a hopper 16a, a powder dropper 16b, and a recoater 16c.

The hopper 16a is a container for storing metal powder. The powder dropper 16b is equipment that drops the powder material 32 stored in the hopper 16a onto the build table 18.

The recoater 16c is an elongated member long in the Y direction, and includes a blade 16d for spreading powder. The recoater 16c spreads the powder material 32 dropped by the powder dropper 16b on the build table 18 and the build plate 22. The recoater 16c is provided to be movable in the X direction in order to spread the powder material 32 over the entire surface of the build table 18.

The build table 18 is horizontally arranged inside the vacuum chamber 3. The build table 18 is disposed below the powder supply device 16. A central portion of the build table 18 is open. The opening shape of the build table 18 is a circle in plan view or a rectangle in plan view (for example, a quadrangle in plan view).

The build box 20 forms a space for formation. In the vacuum chamber 3, the build box 20 having a circular or angular cross section is provided. An upper end portion of the build box 20 is connected to an opening edge of the build table 18. A lower end portion of the build box 20 is connected to a bottom wall of the vacuum chamber 3.

The collection box 21 collects the powder material 32 supplied more than necessary among the powder material 32 supplied onto the build table 18 by the powder supply device 16.

The build plate 22 forms the formed object 38 using the powder material 32. The formed object 38 is formed by being laminated on the build plate 22. The build plate 22 is formed in a circular shape in plan view or a rectangular shape in plan view in accordance with the opening shape of the build table 18. The build plate 22 is connected (grounded) to the inner base 24 by a ground wire 34 so as not to be in an electrically floating state. The inner base 24 is held at a ground (GND) potential.

At the time of forming each layer of the formed object 38, a powder bed is formed on the build plate 22 and the inner base 24. The powder bed is obtained by laying the powder material 32 up to a position several mm higher than the build table 18 installed on the build box 20. The powder bed is formed by the powder supply device 16 filled with the powder material 32 and the recoater 16c.

The inner base 24 is provided to be movable in the up and down direction (Z direction). The build plate 22 moves in the up and down direction integrally with the inner base 24. The inner base 24 has a larger outer dimension than the build plate 22. The inner base 24 slides in the up and down direction along the inner surface of the build box 20. A seal member 36 is attached to an outer peripheral portion of the inner base 24. The seal member 36 is a member that maintains slidability and sealability between the outer peripheral portion of the inner base 24 and the inner surface of the build box 20.

The seal member 36 is made of a material having heat resistance and elasticity. The powder material 32 is spread on the inner base 24, and the build plate 22 on which the formed object 38 is formed is disposed thereon.

The plate moving device 26 moves the build plate 22 and the inner base 24 in the up and down direction. The plate moving device 26 is provided at the bottom and inside of the build box 20. The plate moving device 26 includes a shaft 26a and a drive mechanism section 26b. The shaft 26a is connected to the lower surface of the inner base 24. The drive mechanism section 26b includes a motor and a powder transmission mechanism (not illustrated), and drives the power transmission mechanism using a motor as a drive source to move the build plate 22 and the inner base 24 in the up and down direction (Z direction) integrally with the shaft 26a. The power transmission mechanism includes, for example, a rack-and-pinion mechanism, a ball screw mechanism, and the like.

The radiation shield cover 28 is disposed between the build plate 22 and the beam radiation device 2 in the Z direction. The radiation shield cover 28 is made of a metal such as stainless steel. The radiation shield cover 28 shields radiation heat generated when the electron beam 15 is radiated to the powder material 32 by the beam radiation device 2.

The electron beam 15 is radiated to the powder material 32 to melt the powder material 32. At this time, if radiation heat radiated from the formed surface 32a of the powder layer is widely diffused into the vacuum chamber 3, thermal efficiency is deteriorated.

On the other hand, when the radiation shield cover 28 is disposed above the build plate 22, the heat radiated from the formed surface 32a is shielded by the radiation shield cover 28, and the shielded heat is reflected by the radiation shield cover 28 and returned to the side of the build plate 22. Therefore, the heat generated by radiation of the electron beam 15 can be efficiently used.

In addition, the radiation shield cover 28 has a function of preventing an evaporated substance generated when the electron beam 15 is radiated to the powder material 32 from adhering (depositing) to the inner wall of the vacuum chamber 3.

Here, the deposition material is metal vapor, metal sputtering by fireworks, or the like.

That is, when the electron beam 15 is radiated to the powder material 32, a part of the melted metal becomes an atomized evaporated substance and rises from the formed surface 32a. The radiation shield cover 28 is disposed to cover the space above the formed surface 32a such that the evaporated substance does not diffuse into the vacuum chamber 3.

The formed object 38 is constructed by two-dimensionally melting the powder material 32 of one layer present in the region of the formed object 38 using the electron beam 15 from the beam radiation device 2 and superimposing the melted powder material. A region other than the formed object 38 of the powder material 32 spread on the build plate 22 is a pre-sintered body 35 obtained by pre-sintering the powder material 32, and has conductivity by the electron beam 15 radiated from the beam radiation device 2.

The electron shield 30 is provided at the bottom of the radiation shield cover 28. The electron shield 30 has an opening 30a and a shield portion 30b. In forming the formed object 38, the electron shield 30 is disposed to cover the upper surface of the powder material 32, that is, the formed surface 32a.

At this time, the opening 30a exposes the powder material 32 spread on the build plate 22. The shield portion 30b is a conductive material that shields the powder material 32 in an unsintered region located outside the opening 30a. The shield portion 30b is desirably formed of the same type of metal material as the powder material.

The shape of the opening 30a is formed in accordance with the shape of the build plate 22. For example, if the build plate 22 is circular in plan view, the shape of the opening 30a in plan view is formed in a circular shape accordingly, and if the build plate 22 is rectangular in plan view, the shape of the opening 30a in plan view is formed in a rectangular shape accordingly.

The electron shield 30 is provided at the bottom of the radiation shield cover 28. The opening 30a and the shield portion 30b of the electron shield 30 are disposed between the build plate 22 and the radiation shield cover 28 in the Z direction. The electron shield 30 includes an enclosure portion 30c. The enclosure portion 30c is disposed to surround the space above the opening 30a. A part (upper portion) of the enclosure portion 30c overlaps the radiation shield cover 28 in the Z direction.

The enclosure portion 30c has a function of shielding radiation heat generated from the formed surface 32a and a function of suppressing diffusion of an evaporated material generated from the formed surface 32a. That is, the enclosure portion 30c has the same function as the radiation shield cover 28. Although not illustrated, the electron shield 30 is provided with a vertical drive mechanism to rise so as not to interfere with the recoater 16c at the time of recoating.

The electron shield 30 is made of a metal having a melting point higher than that of the powder material 32 used as a raw material of the formed object 38. The electron shield 30 is made of a material having low reactivity with the powder material 32. As a constituent material of the electron shield 30, for example, titanium can be exemplified. In addition, the electron shield 30 may be made of metal of the same material as the powder material 32 to be used. Although not illustrated, the electron shield 30 is electrically grounded to GND. The electron shield 30 suppresses the occurrence of powder scattering to a small scale by an electric shield function when the powder material 32 is pre-sintered by radiation the electron beam 15 in a preheating process before a main sintering process described later.

On the upper surface of the radiation shield cover 28, a camera 42 for imaging the state of the formed surface and a shutter 44 for preventing deposition on the camera 42 as much as possible are attached. The camera 42 is a camera capable of imaging the formed surface 32a of the powder layer. The camera 42 is disposed to be shifted in position in the Y direction from the beam radiation device 2 so as not to interfere with the position of the beam radiation device 2.

The camera 42 is preferably a visible light camera such as a digital video camera, for example. The camera 42 generates an image (image data) of the powder layer by imaging the formed surface 32a of the powder layer. Therefore, the image generated by the camera 42 is an image indicating the state of the formed surface 32a of the powder layer. Note that, imaging by the camera 42 is performed in a state where illumination light emitted from an illumination light source (not illustrated) included in the three-dimensional PBF-AM apparatus 1 is applied to the formed surface 32a of the powder layer.

The shutter 44 protects the camera 42 and an observation window such that the evaporated substance generated from the formed surface 32a when the powder material 32 is melted by radiation of the electron beam 15 does not adhere to the camera 42 and the observation window. Imaging of the formed surface 32a by the camera 42 is performed in a state where the shutter 44 is opened. The camera 42 basically keeps imaging, and the shutter 44 is closed only during a melting process. In addition, in a process in which the evaporated substance is likely to be generated and a process in which the amount of the evaporated substance generated is large, that is, in a process in which the powder material 32 is melted by the electron beam 15, imaging by the camera 42 is performed in a state where the shutter 44 is closed.

A plurality of detection units 46 that detect backscattered electrons are disposed below the beam radiation device 2.

Specifically, the detection units 46 are disposed between the beam radiation device 2 and the formed surface 32a of the formed object 38 formed on the build plate 22. The detection units 46 measure backscattered electrons generated by the electron beam 15 radiated to the formed object 38 or the pre-sintered body 35, and output data of a backscattered electron signal as layer data to a PC 54 or a hard computer (not illustrated) illustrated in FIG. 2 which will be described later.

In recent years, for the purpose of quality control of the formed object 38, the three-dimensional PBF-AM apparatus 1 to which a function of monitoring the surface of the formed object 38 is added has been provided. In the three-dimensional PBF-AM apparatus 1, the surface of the formed object 38 can be visualized from not only data of an image obtained by imaging the surface of the formed object 38 using the camera 42 described above but also data obtained by the detection units 46 detecting backscattered electrons backscattered from the surface of the formed object 38. However, the three-dimensional PBF-AM apparatus 1 may have either a configuration including only the camera 42 or a configuration including the camera 42 and the detection units 46.

In the following embodiment, an example in which a defect is detected using a BSE image formed on the basis of backscattered electrons detected by the detection units 46 will be described. In monitoring using backscattered electrons using the electron beam, the PC 54 or the hard computer performs processing of calculating and imaging a backscattered electron signal, and the like to monitor the state of the powder bed and the formed object 38. When a defect is detected by monitoring using backscattered electrons, the PC 54 usually acquires monitoring data immediately after melting a pre-cintered body.

1-2. Configuration Example of Control System of Three-dimensional PBF-AM Apparatus

Next, a configuration example of a control system of the three-dimensional PBF-AM apparatus 1 will be described.

FIG. 2 is a block diagram illustrating a configuration example of the control system of the three-dimensional PBF-AM apparatus 1 of the present example. The three-dimensional PBF-AM apparatus 1 includes the detection units 46 described above. Furthermore, in FIG. 2, hardware and software parts for performing forming control, which are outside the configuration of the three-dimensional PBF-AM apparatus 1 shown in FIG. 1, are added.

As illustrated in FIG. 2, the three-dimensional PBF-AM apparatus 1 includes a polarization amplifier control circuit 51 indicating an electron beam control unit, an analog-digital conversion circuit (ADC) 52, a preamplifier 53, the personal computer (PC) 54 indicating an example of a control unit, and a BSE monitor 55.

The polarization amplifier control circuit 51 is connected to the beam radiation device 2 and the PC 54. Then, the polarization amplifier control circuit 51 controls the beam radiation device 2 on the basis of set beam scanning information. As a result, the beam radiation device 2 radiates the electron beam 15 to a predetermined position. In addition, the polarization amplifier control circuit 51 transmits beam radiation position information indicating the radiation position of the electron beam 15 to the PC 54.

The preamplifier 53 is connected to the detection units 46 and the ADC 52. Then, the preamplifier 53 converts backscattered electron current detected by the detection units 46 from a current signal to a voltage signal. The voltage signal converted by the preamplifier 53 is transmitted to the ADC 52. The ADC 52 converts the backscattered electron signal, which is a voltage signal, from an analog signal to a digital signal and transmits the digital signal to the PC 54.

The PC 54 is an example of an information processing apparatus, and includes a central processing unit (CPU) 54a, a read only memory (ROM) 54b, a random access memory (RAM) 54c, and a recording device 54d.

The CPU 54a reads a program code of software for realizing each function according to the present embodiment from the ROM 54b, loads the program code into the RAM 54c, and executes the program code. Variables, parameters, and the like generated in the middle of arithmetic processing of the CPU 54a are temporarily written to the RAM 54c, and these variables, parameters, and the like are appropriately read by the CPU 54a.

An image processing unit, which is one function of the CPU 54a, captures an image generated by the camera 42 and performs predetermined image processing on the captured image. Then, the PC 54 outputs the camera image subjected to the image processing by the image processing unit to the BSE monitor 55. A forming control software program (hereinafter, abbreviated as "forming control software") read from the ROM 54b and executed by the CPU 54a controls the polarization amplifier control circuit 51. The forming control software controls the preamplifier 53 via the ADC 52.

As the recording device 54d, for example, a hard disk drive (HDD), a solid state drive (SSD), an optical disk, a magneto-optical disk, or a nonvolatile recording medium such as a flash memory is used. In addition to an operating system (OS) and various parameters, a program for causing the PC 54 to function is recorded in the recording device 54d.

The ROM 54b and the recording device 54d record programs, data, and the like necessary for the operation of the CPU 54a, and are used as an example of a non-transitory computer-readable storage medium storing a program executed by the PC 54. The recording device 54d stores the camera image generated by the image processing unit. Further, the recording device 54d stores the beam radiation position information transmitted from the polarization amplifier control circuit 51.

The CPU 54a selects a predetermined arithmetic expression from a plurality of arithmetic expressions according to the forming process. Then, the CPU 54a performs arithmetic processing on the backscattered electron signal using the selected arithmetic expression to calculate an arithmetic signal. Then, the image processing unit images the arithmetic signal to acquire a backscattered electron image (BSE Image). The CPU 54a outputs the acquired backscattered electron image (BSE image) to the BSE monitor 55. In addition, the recording device 54d stores the backscattered electron image (BSE image) .

The BSE monitor 55 includes, for example, a display such as a liquid crystal display or an organic electroluminescence display (ELD). The BSE monitor 55 displays the BSE image and the camera image output from the PC 54 on a display screen.

As an input device 56, for example, a keyboard, a mouse, or the like is used. A user can perform predetermined input operations and instructions to the PC 54 using the input device 56.

1-3. Operation Example of Three-dimensional PBF-AM Apparatus

Next, an operation example of the three-dimensional PBF-AM apparatus 1 will be described.

First, the user creates forming data for melting according to a shape of the formed object 38 to be formed using the forming control software in the PC 54. At this time, the user inputs appropriate melting conditions including a correction function and the like. After completing creation of the forming data, the user causes the three-dimensional PBF-AM apparatus 1 to start forming on the basis of the forming data.

Next, the beam radiation device 2 operates on the basis of a control command given from the PC 54 to heat the build plate 22. The beam radiation device 2 radiates the electron beam 15 to the build plate 22 through the opening 30a of the electron shield 30, and scans the build plate 22 with the electron beam 15. Accordingly, the build plate 22 is heated to a temperature at which the powder material 32 is pre-sintered.

Next, the powder material 32 is spread on the build plate 22. The plate moving device 26 moves down the build plate 22 by a predetermined amount by operating on the basis of a control command given from the PC 54.

Next, the user disposes the upper surface of the build plate 22 covered with the powder material 32 at substantially the same height as the upper surface of the powder material 32 spread on the build table 18. Next, the user lowers the electron shield 30 to the upper surface of the build plate 22, and brings the electron shield 30 into contact with the powder material 32 to cover the powder material 32 present on the outer periphery of the build plate 22.

Next, the beam radiation device 2 radiates the electron beam 15 to a region slightly narrower than the entire upper surface of the build plate 22. That is, the region slightly narrower than the entire upper surface of the build plate 22 is a region where the electron beam 15 is not applied to the opening inside the electron shield 30, and the beam radiation device 2 radiates the electron beam to this region. As described above, the beam radiation device 2 radiates the electron beam 15 to a region slightly narrower than the entire upper surface of the build plate 22, thereby raising the temperature of the build plate 22 in advance to a temperature at which the powder material 32 is completely pre-sintered.

At the start of forming, the plate moving device 26 lowers the inner base 24 by a predetermined amount such that the upper surface of the build plate 22 is slightly lower than the upper surface of the powder material 32 spread on the build table 18. At this time, the build plate 22 descends by a predetermined amount $\Delta Z$ together with the inner base 24. The slightly lowered $\Delta Z$ corresponds to the subsequent layer thickness in the Z direction. Thereafter, the plate moving device 26 moves the electron shield 30 upward.

Next, the powder supply device 16 drops the powder material 32 supplied from a hopper 16a to the powder dropper 16b onto the build table 18 by the powder dropper 16b. Thereafter, the powder supply device 16 moves the recoater 16c from one end side to the other end side in the X direction to spread the powder material 32 on the inner base 24 to form a powder bed.

As a result, the powder material 32 is spread on the build table 18 to a thickness corresponding to $\Delta Z$. The excess powder material 32 is collected in the collection box 21. After the recoater 16c comes out of the electron shield 30, the powder supply device 16 lowers the electron shield 30 to the formed surface again, and the electron shield 30 covers the powder material 32 present on the outer periphery of the build plate 22.

Next, the beam radiation device 2 operates on the basis of a control command given from the polarization amplifier control circuit 51 and the PC 54 to preheat the powder layer on the build plate 22. That is, the beam radiation device 2 performs powder-heating (P.H) on the powder layer on the build plate 22 to pre-sinter the powder material 32. When the powder material 32 is pre-sintered, the powder material 32 can have conductivity. Therefore, the powder material 32 can suppress powder scattering in the main sintering process performed after the preheating process.

The beam radiation device 2 radiates the electron beam 15 to the powder material 32 spread on the build plate 22. Furthermore, the beam radiation device 2 scans the electron beam 15 over a wider range than a region (hereinafter, also referred to as a "forming region") for forming the formed object 38, which is a region where the electron beam is not applied to the opening inside the electron shield 30. Accordingly, the powder material 32 present in the forming region and the powder material 32 present around the forming region are both pre-sintered.

According to a two-dimensional shape obtained by slicing a designed formed object prepared in advance at ΔZ intervals, the beam radiation device 2 melts the two-dimensional shape region by the electron beam 15. After melting and solidifying the powder material 32 for one layer, the beam radiation device 2 radiates the electron beam 15 to the region slightly narrower than the build plate 22 again to raise the temperature, and prepares for spreading the powder material 32. After raising the temperature to a predetermined temperature, the beam radiation device 2 turns off the electron beam 15 and moves the electron shield 30 upward.

The plate moving device 26 lowers the inner base 24 by ΔZ, and moves the recoater 16c to the opposite side again along the upper surface of the powder material 32 spread on the build table 18. Then, the plate moving device 26 spreads the powder material 32 for ΔZ on the front layer, and lowers the electron shield 30 to the formed surface again.

The beam radiation device 2 radiates the electron beam 15 to a region where the electron beam 15 is not applied to the opening inside the electron shield 30 to reliably pre-sinter the powder material 32 newly laid, and then, melts a two-dimensional region corresponding to the layer. The beam radiation device 2 repeats this process to form the formed object 38.

In addition, the beam radiation device 2 acquires a backscattered electron image (BSE image) as will be described below. First, the beam radiation device 2 scans the pre-sintered region where the pre-sintered powder material 32 is present with the electron beam 15 by operating on the basis of a control command given from the polarization amplifier control circuit 51 and the PC 54. At this time, the beam radiation device 2 reduces the electron beam current of the electron beam 15 as much as possible, and irradiates the formed surface 32a in focus. The detection units 46 detect backscattered electrons generated by the electron beam 15. The detection units 46 output a detected backscattered electron signal to the PC 54 via the preamplifier 53 and the ADC 52.

1-4. Configuration Example of Control Block

FIG. 3 is a block diagram illustrating a configuration example of a control block of the PC 54. Defect detection processing performed by the functional blocks illustrated in FIG. 3 in cooperation is realized by the CPU 54a of the PC 54 executing the forming control software Furthermore, each functional block of the PC 54 illustrated in FIG. 3 can be incorporated into the three-dimensional PBF-AM apparatus 1.

The three-dimensional PBF-AM apparatus 1 illustrated in FIG. 1 includes an input unit 60, the PC 54, and a display unit 90.

The input unit 60 has a function of enabling an input operation by the user, and the function is realized by the input device 56 illustrated in FIG. 2. The input unit 60 is used by the user to perform an input operation. The input unit 60 is a functional unit of the input device 56 illustrated in FIG. 2. The input operation by the user includes setting of each parameter to be described later, display selection of a defect or a defect candidate, and the like. Furthermore, an instruction to display the formed object 38 in the middle of forming or after forming is completed on the display unit 90 by 2 dimensions (2D) or 3 dimensions (3D) is also performed according to the input operation of the user.

The PC 54 includes a control unit 70 and a recording unit 80.

The control unit 70 has a function of calculation and control of each processing of the present example, and the function is realized by the CPU 54a, the ROM 54b, and the RAM 54c illustrated in FIG. 2.

The recording unit 80 has a function of recording each parameter, each piece of data, each image, and the like of the present example, and the function is realized by the recording device 54d illustrated in FIG. 2.

The control unit 70 includes a forming control unit 71, a defect detection area setting unit 72, a defect candidate identification unit 73, a defect detection unit 74, and a display control unit 75. The recording unit 80 includes a parameter recording unit 81 and a defect related information recording unit 82.

The parameter recording unit 81 records parameters such as a threshold to be compared in each processing which will be described later. The parameter recording unit 81 also stores, as a parameter, each piece of information of a defect detection area and a defect detection exclusion area set by the defect detection area setting unit 72. The defect detection area is an area where a defect detected in the area is identified as a defect that leads to a quality defect of the formed object 38. The defect detection exclusion area is an area where a defect detected in the area is not identified as a defect that leads to a quality defect of the formed object 38. As the defect detection exclusion area, for example, an area that is not a defect but is likely to be erroneously detected as a defect, an area serving as a cutting allowance, or the like is set.

In the present embodiment, the defect detection area and the defect detection exclusion area are set by the user via a defect detection area setting screen Sc1 (refer to FIG. 5). The defect detection area setting screen Sc is displayed on the display unit 90 (refer to FIG. 3) under the control of the display control unit 75. A configuration example of the defect detection area setting screen Sc1 will be described with reference to FIG. 5 which will be described later.

The defect detection unit 74 does not include information detected as a defect in the defect detection exclusion area in defect information. As a result, information detected as a defect in the defect detection exclusion area is not displayed as defect information on the screen of the display unit 90. When the defect information is not output, PBF-AM processing for the formed object 38 performed on the basis of the defect information is continued without being stopped.

Processing of stopping PBF-AM processing for the formed object 38 is performed when defect information is output from the defect detection unit 74 under the control of the forming control unit 71. Forming control processing including PBF-AM processing stopping processing by the forming control unit 71 will be described in detail with reference to FIG. 21 which will be described later.

The defect related information recording unit 82 records defect related information including layer data, a defect candidate identified by the defect candidate identification unit 73, a defect detection result, defect information which is information on defects that are determined to lead to a defect, and the like. The defect related information includes at least one of the number of defects detected by the defect detection unit 74, the locations of defects, the formed object volume, a volume defect rate, the number of defects, and a maximum length.

The forming control unit 71 controls processing related to PBF-AM of the three-dimensional PBF-AM apparatus 1 such as the beam radiation device 2 and the plate moving device 26 described above. Furthermore, after melting is performed in PBF-AM processing, the forming control unit 71 controls the beam radiation device 2 such that the detection units 46 detect backscattered electrons generated by scanning the formed surface with an emission current low enough to detect the backscattered electrons, and acquire a BSE image. In a case where the height of a concave portion or a convex portion on the layer surface exceeds a predetermined threshold, the forming control unit 71 records, in the defect related information recording unit 82, layer data determined to have unevenness on the formed surface. However, the defect related information recording unit 82 also records layer data that is not determined to have unevenness on the formed surface.

Control of stopping PBF-AM processing for the formed object 38 is performed when defect information is input from the defect detection unit 74 under the control of the forming control unit 71.

The defect detection area setting unit 72 sets a defect detection area and a defect detection exclusion area on the basis of the content of user input to the defect detection area setting screen Sc1 (refer to FIG. 5) which will be described later.

The defect candidate identification unit 73 reads layer data captured for each layer in which the formed object 38 is powder-bed-fusion additively manufactured from the defect related information recording unit 82, and detects a defective portion generated in the layer as a defect candidate for each layer on the basis of the layer data. In addition, the defect candidate identification unit 73 identifies a plurality of defect candidates at substantially the same positions in a plurality of layers adjacent in the stacking direction.

The defect detection unit 74 detects defects remaining in the formed object 38 on the basis of the sizes in the lamination direction of the plurality of defect candidates located at substantially the same positions identified in the plurality of layers and the sizes thereof in the layers. Here, the defect detection unit 74 integrates the plurality of defect candidates having substantially the same position in the lamination direction, and attaches a defect candidate identifier (for example, ID1 to ID4) to each integrated defect candidate. Further, the defect detection unit 74 measures the lamination direction length (Lz) of the integrated defect candidate, a first direction length (length Lx in the X direction), and a second direction length (length Ly in the Y direction) in the layers intersecting the lamination direction of the integrated defect candidate for each layer, and sets the maximum length of the first direction length (Lx) and the second direction length (Ly) as a maximum layer length (Lxy). Then, the defect detection unit 74 sets the longer one of the lamination direction length (Lz) and the maximum layer length (Lxy) as a maximum length, and detects the integrated defect candidate as a defect when the maximum length exceeds a maximum length threshold ($\delta$). Furthermore, the defect detection unit 74 identifies a defect detected in the defect detection area among the detected defects as a defect that may be a defect in quality of the formed object 38, and outputs defect information regarding the identified defect.

The display control unit 75 controls a display form of an image to be displayed on the display unit 90 on the basis of the layer data read from the defect related information recording unit 82, defect related information, and an input operation input from the input unit 60. For example, the display control unit 75 causes the display unit 90 to display the defect detection area setting screen Sc1 (refer to FIG. 5) and the like. Furthermore, the display control unit 75 generates a 2D image, a 3D image, a graph, and the like of the formed surface of the formed object 38, and generates a screen (an example of a visualized image) for displaying these images on the display unit 90. Furthermore, the display control unit 75 also performs control (enlargement and reduction of an image, movement of an image to be displayed, and the like) to change display content of the screen in accordance with an input operation. Then, the display control unit 75 controls the display unit 90 to be able to display the visualized image. The display control unit 75 causes information such as the state of the formed object 38, the shapes of defect candidates (FIGS. 10 to 13, FIG. 17, and the like which will be described later), the presence or absence of defect detection, and various graphs to be displayed on various screens on the display unit 90 even in the middle of PBF-AM processing, and allows the user to check the displayed information.

The display unit 90 has a function of displaying an image processed by the PC 54, and the function is realized by the BSE monitor 55 illustrated in FIG. 2. As the display unit 90, for example, a liquid crystal display device, an organic EL display device, or the like is used. In a case where a touch panel display is used for the PC 54, the input unit 60 and the display unit 90 are integrally formed.

Although the PC 54 includes the recording unit 80 in FIG. 3, the recording unit 80 may be configured in a recording medium outside the PC 54. In this case, the control unit 70 reads and processes parameters, layer data, and data of defect related information recorded in the external recording medium. Further, the control unit 70 illustrated in FIG. 3 may be composed of only the defect detection area setting unit 72 and the defect detection unit 74.

1-5. Example of Defect Detection Area Setting Processing

Next, an example of defect detection area setting processing according to the present embodiment will be described with reference to FIG. 4. FIG. 4 is a flowchart illustrating an example of a procedure of defect detection area setting processing.

For example, the display control unit 75 causes the display unit 90 (refer to FIG. 3) to display the defect detection area setting screen Sc1 (refer to FIG. 5) (step S1). Next, the defect detection area setting unit 72 receives input of a range of a defect detection area and a defect detection exclusion area from the user via the defect detection area setting screen Sc1 (S2). Next, the defect detection area setting unit 72 records each piece of information of the defect detection area and the defect detection exclusion area in the parameter recording unit 81 (refer to FIG.3) of the recording unit 80 (S3). After processing of step S3, the defect detection area setting processing ends.

1-6. Configuration Example of Defect Detection Area Setting Screen

Next, a configuration example of the defect detection area setting screen Sc1 will be described with reference to FIG. 5. FIG. 5 is a diagram illustrating a configuration example of the defect detection area setting screen Sc1.

As illustrated in FIG. 5, the defect detection area setting screen Sc1 includes a defect detection area information setting section St1, a selected lamination number display section St2, and a setting information display section St3.

The defect detection area information setting section St1 is a setting section to which parameters necessary to divide a detection area in the XY cross section are input. The detection area in the XY cross section is divided into a defect detection internal area and a defect detection peripheral area on the basis of the parameters input to the defect detection area information setting section St1. The defect detection internal area is a defect detection area set inside (side of the formed object 38) the boundary between the formed object 38 and the powder bed. The defect detection peripheral area is an area set in an area set outside the boundary between the formed object 38 and the powder bed, and inside the boundary between the formed object 38 and the powder bed, which does not correspond to the defect detection area, and is a defect detection exclusion area. Here, the defect detection internal area and the defect detection peripheral area will be described with reference to FIGS. 6 and 7.

FIG. 6 is a diagram illustrating an example of an explanation screen Sc11 of the defect detection internal area, and FIG. 7 is a diagram illustrating an example of an explanation screen Sc12 of the defect detection peripheral area. The explanation screen Sc11 for the defect detection internal area and the explanation screen Sc12 for the defect detection peripheral area are displayed in regions such as the lower side, the left side, and the right side of the defect detection area setting screen Sc1 illustrated in FIG. 5. Alternatively, an explanation screen display button or the like may be provided on the defect detection area setting screen Sc1 and displayed on a screen that transitions when the button is pressed.

A description of an internal area parameter $W_{in}$ ($\mu$m) is shown on the left side of FIG. 6. Specifically, it is described that the internal area parameter $W_{in}$ is a parameter that defines the distance (width) between the boundary (indicated by a solid line) between the formed object 38 and the powder bed and an outer peripheral portion (indicated by a broken line) of the defect detection internal area. The right side of FIG. 6 illustrates a state in which the defect detection internal area is defined by the internal area parameter $W_{in}$. On the right side of FIG. 6, the defined defect detection internal area is indicated by a black pattern.

The left side of FIG. 7 shows a description of the internal area parameter $W_{in}$ and a peripheral area parameter $W_{out}$. Specifically, it is described that the peripheral area parameter $W_{out}$ is a parameter that defines the distance from the boundary between the formed object 38 and the powder bed to the outer peripheral portion of the defect detection peripheral area.

The right side of FIG. 7 illustrates a state in which the defect detection peripheral area is defined by the internal area parameter $W_{in}$ and the peripheral area parameter $W_{out}$. More specifically, it is illustrated that a region having a width obtained by summing the width of the internal area parameter $W_{in}$ and the width of the peripheral area parameter $W_{out}$ is set as the defect detection peripheral area. On the right side of FIG. 7, the defined defect detection peripheral area is indicated by a right-downward diagonal line pattern.

Returning to FIG. 5, the description will be continued. The defect detection area information setting section St1 includes an internal area parameter setting section St11 and a peripheral area parameter setting section St12.

The internal area parameter setting section St11 (an example of a first setting section) is a setting section for receiving an input of the internal area parameter $W_{in}$ [$\mu$m]. The peripheral area parameter setting section St12(an example of a defect detection exclusion area setting section and a second setting section) is a setting section for receiving an input of the peripheral area parameter $W_{out}$ [μm].

As described above, in the region around the boundary between the formed object 38 and the powder bed, erroneous detection of a defect is likely to occur. Therefore, by setting various parameters to the internal area parameter setting section St11 and the peripheral area parameter setting section St12, the user can appropriately set the defect detection peripheral area and the defect detection peripheral area that is a defect detection exclusion area in the periphery of the boundary.

The defect detection exclusion area information setting section St13 is a parameter setting section that does not control defect detection from the defect detection exclusion area to the down skin n layer. When the option of "no setting" (not illustrated) is selected in the defect detection exclusion area information setting section St13, defect detection based on information of the defect detection exclusion area is not performed.

In the setting information display section St3, information on the defect detection internal area and the defect detection peripheral area is illustrated in a diagram.

## 1-7. Example of Defect Detection Processing

### 1-7-1. Example 1

Next, an example of defect detection processing according to example 1 of the present embodiment will be described with reference to flowcharts of FIG. 8 and subsequent drawings and explanatory diagrams. In the following description, only the operation of a part related to defect detection different from the conventional one will be described, and the other parts related to the forming process are the same as the content described in the item of the prior art, and thus are omitted. The PC 54 (forming control software) of the present example can perform defect detection in real time during PBF-AM for the formed object 38.

FIG. 8 is a flowchart illustrating an example of a procedure of defect detection processing according to example 1. The defect detection processing is an example of a defect detection method performed by the control unit 70.

First, the forming control unit 71 shown in FIG. 3 substitutes m+1 as an initial value 0 for m representing an m-th layer to set a first layer (S11). Next, the forming control unit 71 performs the above-described PBF-AM processing in the first layer (S12).

Next, the forming control unit 71 determines whether PBF-AM processing for a plurality of layers is completed (S13). In a case where PBF-AM processing for the plurality of layers is not completed (NO in S13), that is, only PBF-AM processing for the first layer is completed, processing returns to step S11, and PBF-AM processing for the second and subsequent layers is performed. On the other hand, in a case where PBF-AM processing for the plurality of layers is completed (YES 1 in S13), processing proceeds to step S14.

Next, the defect candidate identification unit 73 performs defect candidate identification processing illustrated in FIG. 9 (S14). Here, the defect candidate identification processing will be described in detail.

FIG. 9 is a flowchart illustrating an example of a procedure of defect candidate identification processing. This defect candidate identification processing is a subroutine of step S14 in FIG. 8.

First, the defect candidate identification unit 73 measures the area of each of two defect candidates adjacent to each other in the lamination direction in which at least parts of the XY cross sections overlap (S21). Here, the area of a defect candidate will be described.

The defect candidate identification unit 73 identifies the positions of defect candidates on the basis of layer data obtained at the time of forming each layer. The defect candidate identification unit 73 assumes that the positions of the defect candidates are substantially the same position in the XY cross section in a plurality of layers, and does not consider the positions in the Z direction (Z coordinates). Here, attention is paid to the positions of the XY cross sections in a plurality of layers, and an area where a plurality of defect candidates overlap in adjacent layers is considered.

However, two defect candidates overlapping in adjacent layers do not always have the same size. Therefore, the defect candidate identification unit 73 sets, as a defect candidate A, one having a larger size in the XY cross section and sets, as a defect candidate B, one having a smaller size in the XY cross section between the two defect candidates. Here, as an example of layers adjacent in the Z direction, a powder layer of an N-th layer (N is an integer of 1 or more) and a powder layer of an (N+1)-th layer are taken. In the following description, the powder layer of the N-th layer and the powder layer of the (N+1)-th layer are abbreviated as an N-th layer and an (N+1)-th layer, respectively.

Here, the formed object 38 and defect candidates will be described with reference to FIGS. 10 to 15.

FIG. 10 is a perspective view of the formed object 38. This perspective view is a 3D display of a plurality of formed objects 38 formed through one-time PBF-AM processing on the basis of Computer Aided Design (CAD) data. In this example, it is shown that a total of 10 formed objects 38 are powder-bed-fusion additively manufactured. Every time melting of one layer of the formed object 38 is completed, the forming control unit 71 illustrated in FIG. 3 acquires a BSE image of the formed object 38 as layer data and records the BSE image in the defect related information recording unit 82. For example, when the forming control unit 71 simultaneously carries out PBF-AM of 10 formed objects 38 illustrated in FIG. 8, a BSE image of the 10 formed objects 38 is acquired as layer data and recorded in the defect related information recording unit 82.

FIG. 11 is a diagram illustrating an example of a BSE image of the formed objects 38 viewed from the top in the Z direction in the middle of PBF-AM. Since it is in the middle of PBF-AM, the formed surfaces of the formed objects 38 are visible in the BSE image. Black spots are faintly visible at the top of the formed objects 38. The black dots are unevenness generated on the formed surfaces in the middle of PBF-AM, and are recorded in layer data by the forming control unit 71 as described above. Then, the defect candidate identification unit 73 identifies the black spots as defect candidates.

FIG. 12 is a diagram illustrating an example of a BSE image in which the defect candidate A generated in the N-th layer is confirmed.

FIG. 13 is a diagram illustrating an example of a BSE image in which the defect candidate B generated in the (N+1)-th layer is confirmed.

As described above, since the area of the defect candidate generated in the N-th layer is larger than that of the defect candidate generated in the (N+1)-th layer, the defect candidate generated in the N-th layer is referred to as defect candidate A, and the defect candidate generated in the (N+1)-th layer is referred to as defect candidate B. The positional relationship between the defect candidate A and the defect candidate B in the Z direction is not important, and the defect candidate A and the defect candidate B are discriminated by the defect candidate identification unit 73 only by the size in the XY cross section.

FIG. 14 is a diagram illustrating an example of a BSE image of the defect candidate A and the defect candidate B confirmed when the N-th layer and the (N+1)-th layer are superimposed.

The positions of the defect candidate A and the defect candidate B in the XY cross section are shifted, but the defect candidate A and the defect candidate B partially overlap. A portion where the defect candidate A and the defect candidate B overlap is referred to as an overlapping portion AB. The defect candidate identification unit 73 measures the areas SAB of the defect candidate A, the defect candidate B, and the overlapping portion AB in the XY cross section for each layer on the basis of the layer data.

In step S11, the defect candidate identification unit 73 measures an area (SA) of a defect candidate of the N-th layer identified in the N-th layer and an area (SB) of a defect candidate of the (N+1)-th layer identified in the (N+1)-th layer among a plurality of defect candidates overlapping in a plurality of layers adjacent in the lamination direction. In addition, the defect candidate identification unit 73 calculates an overlapping area (SAB) of an overlapping portion where the defect candidate of the N-th layer and the defect candidate of the (N+1)-th layer overlap in the lamination direction.

Next, the defect candidate identification unit 73 calculates an area ratio of the two defect candidates and an area ratio of the overlapping portion AB (S22). Here, the defect candidate identification unit 73 calculates a ratio (RA) of the overlapping area to the area of the defect candidate of the N-th layer and a ratio (RB) of the overlapping area to the area of the defect candidate of the (N+1)-th layer as area ratios. Therefore, the defect candidate identification unit 73 represents the area ratio of the overlapping portion AB to the defect candidate A as RA. The area ratio RA is calculated by the following equation (1).

$$RA=SAB/SA \quad ...(1)$$

Similarly, the defect candidate identification unit 73 represents an area ratio of the overlapping portion AB to the defect candidate B as RB. The area ratio RB is calculated by the following equation (2).

$$RB=SAB/SB \quad ...(2)$$

Next, the defect candidate identification unit 73 determines whether conditions for the area ratios RA and RB and parameters $\alpha$ and $\beta$ are satisfied (S23). The parameter $\alpha$ is an example of an area ratio threshold to be compared with the area ratio RA, and the parameter $\beta$ is an example of an area ratio threshold to be compared with the area ratio RB.

When it is determined that the conditions for the area ratios RA and RB and the parameters $\alpha$ and $\beta$ are satisfied (YES in S23), the defect candidate identification unit 73 identifies that the two defect candidates A and B are at substantially the same position (S24).

For example, in the parameter recording unit 81, a total of two area ratio thresholds serving as thresholds of the area ratios RA and RB are recorded in the parameter recording unit 81 one by one. The area ratio threshold parameter serving as the threshold of the area ratio RA is denoted by $\alpha$, and the area ratio threshold parameter serving as the threshold of the area ratio RB is denoted by $\beta$. The area ratio threshold parameter $\alpha$ is used as an example of a first area threshold, and the area ratio threshold parameter $\beta$ is used as an example of a second area threshold. When the ratio RA of the overlapping area is equal to or exceeds the first area threshold ($\alpha$) and the ratio RB of the overlapping area to the area of the defect candidate of the (N+1)-th layer is equal to or exceeds the second area threshold ($\beta$), the defect candidate identification unit 73 identifies that the defect candidate of the N-th layer and the defect candidate of the (N+1)-th layer are at substantially the same position.

For example, when the following condition (3) is satisfied, the defect candidate identification unit 73 defines that the two defect candidates A and B are at substantially the same position.

$$RA \geq \alpha \text{ and } RB \geq \beta, \text{ or}$$
$$RA \geq \alpha \text{ and } RB > \beta, \text{ or}$$
$$RA > \alpha \text{ and } RB > \beta, \text{ or}$$
$$RA > \alpha \text{ and } RB \geq \beta \quad ...(3)$$

In step S23, when the conditions for the area ratios RA and RB and the parameters $\alpha$ and $\beta$ are not satisfied (NO in S23), the defect candidate identification unit 73 determines whether conditions for the area ratios RA and RB and a parameter $\gamma$ are satisfied (S25). When it is determined that the conditions for the area ratios RA and RB and the parameter $\gamma$ are satisfied (YES in S25), the defect candidate identification unit 73 identifies that the two defect candidates A and B are at substantially the same position (S24).

In FIG. 14, a case where the sizes of the defect candidates A and B do not change extremely has been described. However, in the actual PBF-AM processing, the sizes of the defect candidates A and B may extremely change. Even in such a case, in order to enable the defect candidate identification unit 73 to identify that the defect candidates A and B are at substantially the same position, the area ratio threshold parameter $\gamma$ is recorded in the parameter recording unit 81 separately from the area ratio threshold parameters $\alpha$ and $\beta$. Here, the parameter $\gamma$ will be described with reference to FIG. 13.

FIG. 15 is a diagram illustrating an example of defect candidates A and B having extremely different sizes.

In the example illustrated in FIG. 15, the position of the defect candidate B is a position included in the defect candidate A, and the defect candidate A is extremely larger than the defect candidate B. In this case, although the aforementioned area ratio RA is smaller than the area ratio threshold parameter $\alpha$, the area ratio RB is larger than the area ratio threshold parameter $\beta$, and thus the condition (3) is not satisfied. However, as can be ascertained from FIG. 15, the defect candidates A and B are considered to be at substantially the same position.

Therefore, the area ratio threshold parameter $\gamma$ is recorded in the parameter recording unit 81 separately from the area ratio threshold parameters $\alpha$ and $\beta$. When the following condition (4) is established and one of the area ratio RA and the area ratio RB exceeds the area ratio threshold parameter $\gamma$, the defect candidate identification unit 73 defines that the two defect candidates are at substantially the same position regardless of the other value.

$$RA > \gamma \text{ or } RB > \gamma \quad ...(4)$$

A definition by which the defect candidate identification unit 73 obtains substantially the same position of two defect candidates using the equations (1) and (2), condition (3) or (4) is referred to as "position definition 1".

After step S24 or when the defect candidate identification unit 73 determines that the conditions for the area ratios RA and RB and the parameter $\gamma$ are not satisfied (NO in S25), the defect candidate identification unit 73 records the positions and sizes of the identified defect candidates in the defect related information recording unit 82 as defect related information (S26), and processing proceeds to step S15 in FIG. 8. In step S15, the defect detection unit 74 performs defect determination processing.

In NO determination in step S25, the defect related information is recorded in the defect related information recording unit 82 because there is a possibility that a defect candidate identified at the time of further sintering the next layer overlaps with the current defect candidate.

Next, processing in which the defect detection unit 74 detects a defect from defect candidates will be described with reference to FIGS. 16 to 19, taking an xz cross-sectional view of a part of the formed object 38 in which the N-th layer to the (N+7)-th layer are laminated as an example. FIG. 17 and subsequent drawings indicate that a defect detection range by the defect detection unit 74 is the first to eighth layers when N is 1.

FIG. 16 is a flowchart illustrating an example of defect determination processing. This defect determination processing is a subroutine of step S15 in FIG. 8. In the following description of the flowchart and the xz cross-sectional view, for convenience of description, the directions are expressed in lower case like x, y, and z directions, but it is assumed that the respective directions represent the same directions as the X, Y, and Z directions illustrated in FIG. 1 and the like.

First, the defect detection unit 74 reads defect related information including defect candidates of layers adjacent in the lamination direction (Z direction) from the defect related information recording unit 82 (S31). However, the defect detection unit 74 may directly acquire defect related information output from defect candidate identification unit 73.

Next, the defect detection unit 74 integrates a plurality of defect candidates that span a plurality of layers and are determined to be at substantially the same position according to the above-described position definition 1 (S32). Next, the defect detection unit 74 assigns a defect candidate ID to each integrated defect candidate (S33). Here, a specific example of processing in steps S32 and S33 will be described with reference to FIGS. 17 and 18.

FIG. 17 is a diagram illustrating an example of defect candidates that span a plurality of layers.

A broken line shown in the drawing represents a boundary of each layer. A rectangular frame defined by a solid line represents a defect candidate generated in each layer. The defect candidates have been identified by the defect candidate identification unit 73.

FIG. 18 is a diagram illustrating an example of defect candidate IDs assigned to defect candidates integrated by the defect detection unit 74.

The defect detection unit 74 integrates defect candidates that span a plurality of layers and are at substantially the same position according to the above-described position definition 1. The defect detection unit 74 assigns a defect candidate ID to each integrated defect candidate.

In the PBF-AM processing, powder layers are laminated in the order of the N-th layer, the (N+1)-th layer, .... The defect candidate identified in the (N+1)-th layer and the defect candidate identified in the (N+2)-th layer have been determined to be at substantially the same position defined by position definition 1 through processing of the defect candidate identification unit 73. Therefore, the defect detection unit 74 integrates two defect candidates located at substantially the same position. Then, the defect detection unit 74 assigns defect candidates ID1 and ID2 to the respective defect candidates integrated in the (N+1)-th layer and the (N+2)-th layer.

The defect detection unit 74 also integrates defect candidates identified in the (N+3)-th layer at substantially the same positions as defect candidates identified for the first time in the (N+2)-th layer, and assigns a defect candidate ID3 to the integrated defect candidate. Similarly, the defect detection unit 74 also integrates defect candidates identified in the (N+6)-th layer at substantially the same positions as defect candidates identified for the first time in the (N+5)-th layer, and assigns a defect candidate ID4 to the integrated defect candidate. The defect candidate IDs assigned to the defect candidates integrated by the defect detection unit 74 remain the same as long as the layers are continuous.

Returning to FIG. 16, the description will be continued. After assigning the defect candidate IDs in step S33, the defect detection unit 74 measures the lengths in the XY direction and the Z direction for each integrated defect candidate (S34). Here, processing in which the defect detection unit 74 measures the lengths in the XY direction and the Z direction will be described with reference to FIG. 19.

FIG. 19 is a diagram illustrating an example in which the lengths in the XY direction and the Z direction of defect candidates integrated by the defect detection unit 74 are measured.

The defect detection unit 74 measures a length in the XY direction and a length Lz in the Z direction of each integrated defect candidate. For example, the defect detection unit 74 measures the length in the Z direction of the integrated defect candidate to which the defect candidate ID1 is assigned as Lz1 and the length in the X direction as Lx1. In FIG. 19, the length in the Y direction, which is the depth direction of the drawing, is not illustrated, but the defect detection unit 74 measures the length in the Y direction as Ly1.

Similarly to the defect candidate with the defect candidate ID1, the defect detection unit 74 measures the length in the Z direction of the integrated defect candidate to which defect candidate ID2 is assigned as Lz2 and the length in the X direction as Lx2. In addition, the defect detection unit 74 measures the length in the Z direction of the integrated defect candidate to which the defect candidate ID3 is assigned as Lz3 and the length in the X direction as Lx3. In addition, the defect detection unit 74 measures the length in the Z direction of the integrated defect candidate to which the defect candidate ID4 is assigned as Lz4 and the length in the X direction as Lx4.

When the defect candidate IDs are not distinguished in the following description, the length in the X direction of an integrated defect candidate is referred to as a "length Lx", the length in the Y direction is referred to as a "length Ly", and the length in the Z direction is referred to as a "length Lz", omitting the defect candidate ID.

Returning to FIG. 16, the description will be continued.

After processing of step S34, the defect detection unit 74 calculates the longer one of the length Lx in the X direction and the length Ly in the Y direction measured for each layer as a "maximum layer length Lxy" (S35). The maximum layer length Lxy is the longer one of a maximum layer length Lx max of defect candidates in the X direction and a maximum layer length Ly max in the Y direction. Here, the maximum layer length Lx max represents the maximum length among a plurality of lengths Lx. The maximum layer length Ly max represents the maximum length among a plurality of lengths Ly.

Next, the defect detection unit 74 compares the length Lz in the Z direction with the maximum layer length Lxy, and sets the longer one as a "maximum length" (S36). Next, the defect detection unit 74 determines whether the maximum length exceeds a maximum length threshold $\delta$ read from the maximum parameter recording unit 81 (S37).

When the defect detection unit 74 determines that the maximum length satisfies the following condition (5) in which the maximum length exceeds the maximum length threshold $\delta$ (YES in S37), the defect detection unit 74 determines that the integrated defect candidate is a defect (S38).

$$\text{Maximum length} > \text{Maximum length threshold } \delta \quad ...(5)$$

Next, the defect detection unit 74 determines a defect in the defect detection area as a defect that leads to a quality defect of the formed object 38, and outputs defect information regarding the defect (S39). After processing of step S39, the defect detection unit 74 moves processing to step S16 in FIG. 8.

On the other hand, when the defect detection unit 74 determines that the maximum length does not satisfy the above condition (5) in which the maximum length exceeds the maximum length threshold δ (NO in S37), the integrated defect candidate is not determined as a defect, and processing proceeds to step S16 in FIG. 8.

After step S15 in FIG. 8, the display control unit 75 determines whether there is an input operation by the user (S16). When the display control unit 75 determines that there is an input operation by the user (YES in S16), processing proceeds to processing of step S17 and the display control unit 75 performs display control processing. On the other hand, when the display control unit 75 determines that there is no input operation by the user (NO in S16), processing proceeds to processing of step S18.

Here, the display control processing (processing of step S17) performed when it is determined in step S16 that there is an input operation by the user will be described.

FIG. 20 is a flowchart illustrating an example of a procedure of display control processing. This defect candidate identification processing is a subroutine of step S17 in FIG. 8.

First, the display control unit 75 receives an input operation of the user (S41) Next, the display control unit 75 reads defect candidates and defect related information from the defect related information recording unit 82 according to the input operation (S42).

Next, the display control unit 75 edits the defect candidates and the defect related information into a visualized image (S43). At this time, the display control unit 75 performs display control processing to edit images of defect candidates, 2D or 3D display of defect related information, and images of graphs of various information, and to create a screen that can be displayed on the display unit 90.

Next, the display control unit 75 outputs the images visualized in step S43 to the display unit 90 (refer to FIG. 3) (S44), and processing proceeds to processing of step S18 in FIG. 8. For example, a screen including an image obtained by forming a plurality of laminated layers into a three-dimensional image, a graph of defect related information for each layer, and the like is displayed on the display unit 90 as an image in which the defect candidates and defect related information are visualized. Defects determined by the defect detection unit 74 are displayed on the display unit 90 as error information. Therefore, even in the middle of PBF-AM, the user can check defect candidates and defect related information online.

After processing of step S17 of FIG. 8 or after NO determination in step S16, the forming control unit 71 determines whether PBF-AM for the final layer is completed (S18). When determining that the PBF-AM for the final layer is not completed (NO in S18), the forming control unit 71 returns to step S11, counts up m of the m-th layer, and continues PBF-AM for the next and subsequent layers, defect candidate identification processing, defect determination processing, and display control processing. In the defect determination processing, processing of integrating defect candidates and determining defects using layer data subjected to PBF-AM processing until counting up of m of the m-th layer is repeatedly performed until PBF-AM for the final layer is completed.

On the other hand, when determining that PBF-AM for the final layer is completed (YES in S18), the forming control unit 71 ends the defect detection processing illustrated in FIG. 8.

The defect detection method according to example 1 described above is referred to as "detection method 1". The parameters α, β, γ, and δ described above may be changed during PBF-AM, or may be fixed once determined. In addition, the values of the parameter may be changed for each type of powder used in PBF-AM processing.

In the defect detection method according to example 1, when the maximum length (longer one of maximum length Lz and maximum length Lxy) of the integrated defect candidate is larger than the maximum length threshold δ, the integrated defect candidate is determined to be a defect. Since a defect formed long in the lamination direction in this manner is highly likely to remain in the formed object 38 after completion of forming, a measure such as stopping PBF-AM processing for the formed object 38 in which a defect is detected can be taken even in the middle of PBF-AM. By taking such a measure, it is possible to prevent the consumption of materials and power due to useless PBF-AM processing.

Conventionally, only XY cross-sectional data of a layer for which defect detection is performed with respect to a layer in which defect detection is carried out has been used. Therefore, in the conventional defect detection method, it is erroneously detected that a defect remains in the formed object 38 although a defect detected in a certain layer may disappear as PBF-AM processing proceeds. On the other hand, in the present embodiment, in addition to XY cross-sectional data of a layer for which defect detection is performed, XY cross-sectional data of a layer laminated after the layer for which defect detection is performed is also used for defect detection. Therefore, a defect candidate that has disappeared after a plurality of layers are laminated is not erroneously detected as a defect. As a result, the accuracy of detection of defects remaining in the formed object 38 can be increased.

Furthermore, since information on a defect determined in the middle of PBF-AM is displayed on the display unit 90, the user can check the status of defects, the shapes of defect candidates for the defects, and the like.

Therefore, the user can redo PBF-AM processing, reset various parameters, and the like at an early stage in which a defect is determined, and can obtain the intended formed object 38.

In the defect detection method (detection method 1) according to example 1, an example in which the display control processing in step S17 of FIG. 8 is performed by online real-time processing has been described, but the display control processing may be performed after forming processing. In this case, the display control processing in step S17 is performed independently in accordance with an input operation of the user. Furthermore, the display control processing may be performed by an external server (cloud server or the like) different from the three-dimensional PBF-AM apparatus 1. In this case, a user in a base different from the facility in which the three-dimensional PBF-AM apparatus 1 is installed can check the result of PBF-AM processing.

The defect candidate indicated by the defect candidate ID2 in FIG. 19 has a shape in which the defect candidates are connected at substantially the same position in multiple layers. The defect candidate is not limited to such a shape, and may branch in the middle. In addition, two defect candidates identified in a certain layer may be connected in a layer laminated next. Even such defect candidates having various shapes can be reliably detected as long as the defect affects the quality of the formed object 38 according to the defect detection method according to the present embodiment.

## 1-7-2. Example 2

Next, a defect detection method according to example 2 of the first embodiment of the present invention will be described.

The defect detection method according to example 2 is performed using the three-dimensional PBF-AM apparatus 1 according to example 1 and the control unit 70 and the recording unit 80 in the PC 54 (refer to FIG. 3). In addition, in the defect detection method according to example 2, the same processing is performed from step S11 in FIG. 8 to step S36 in FIG. 16 according to example 1.

In example 2, maximum length thresholds δz and δxy used by the defect detection unit 74 to determine a defect are recorded in the parameter recording unit 81. Then, in a case where the maximum length is the lamination direction length Lz and the lamination direction length Lz exceeds the maximum length threshold δz in the lamination direction, or in a case where the maximum length is the maximum layer length Lxy and the maximum layer length Lxy exceeds the maximum layer length threshold δxy in the layer, the defect detection unit 74 detects an integrated defect candidate as a defect.

For example, in step S37 (refer to FIG. 16) of the defect detection method according to example 2, when the maximum length is Lz, the defect detection unit 74 compares the maximum length Lz with the threshold δz. When determining that the maximum length Lz is greater than the threshold δz, the defect detection unit 74 proceeds to step S38 and determines the integrated defect candidate as a defect.

On the other hand, when the maximum length is Lxy (Lx max or Ly max), the defect detection unit 74 compares the maximum length Lxy with the maximum layer length threshold δxy. When determining that the maximum length Lxy is greater than the maximum layer length threshold δxy, the defect detection unit 74 proceeds to step S38 and determines the integrated defect candidate as a defect.

The defect detection method according to example 2 described above is referred to as "detection method 2".

In Example 1, the threshold is unified to δ regardless of the XYZ direction with respect to the maximum length. However, there is a high possibility that how the powder material is melted changes in the XY direction and the Z direction. For example, how the powder melts in the XY direction changes depending on the intensity of the electron beam, the motion of scanning in the XY direction, and the like. On the other hand, how the powder melts in the Z direction varies depending on the depth of the electron beam in the lamination direction. Therefore, in the second embodiment, the maximum length in the XY direction and the maximum length in the Z direction are compared with each threshold by changing the threshold to be compared in two patterns in a case where the maximum length is in the XY direction and in a case where the maximum length is in the Z direction. Therefore, in the XY direction and the Z direction, a defect candidate that can vary depending on how the powder material melts can be appropriately determined as a defect.

The parameters α, β, γ, δz, and δxy described above may be changed during PBF-AM, or may be fixed once determined. In addition, the values of the parameters may be changed for each type of powder to be used. In addition, the values of the parameter may be changed for each type of powder used in PBF-AM processing.

In the first embodiment described above, position definition 1 has been described as the definition of the overlapping state of defect candidates, and detection methods 1 and 2 have been described as the detection method after position definition is completed. A combination of position definition 1 and detection methods 1 and 2 is not necessarily limited to a combination of example 1 and example 2 of the first embodiment, and position definition 1 and detection methods 1 and 2 may be freely combined and used.

Although various parameters are used in the first embodiment described above, these parameters may be changed depending on the layer. For example, in example 1, the four types of parameters α, β, γ, and δ are listed. Among these four types of parameters, the maximum length threshold δ can be set to δ=5 for up to 100 to 200 layers, δ=10 for up to 201 to 300 layers, and the like. Appropriate values of these parameters may vary depending on the shape of the formed object 38. In such a case, it is expected that the defect detection accuracy is further improved by changing these parameters depending on the layer.

1-8. Example of Forming Control Processing

Next, an example of forming control processing according to the first embodiment of the present embodiment will be described with reference to FIG. 21. FIG. 21 is a flowchart illustrating an example of a procedure of forming control processing.

First, the forming control unit 71 (refer to FIG. 3) instructs the three-dimensional PBF-AM apparatus 1 (refer to FIG. 1) to start three-dimensional PBF-AM processing based on forming data (not illustrated) (S51). Next, the forming control unit 71 determines whether defect information is input from the defect detection unit 74 (S52). When a defect detected by the defect detection unit 74 is a defect detected in a defect detection area, defect information is input from the defect detection unit 74. On the other hand, when the defect is a defect detected in a defect detection exclusion area, defect information is not output from the defect detection unit 74. When it is determined in step S52 that defect information has not been input (NO in S52), the forming control unit 71 causes the three-dimensional PBF-AM apparatus 1 to continue forming (S53).

Next, the forming control unit 71 determines whether forming of all forming data is completed (S54). When it is determined in step S54 that forming of all forming data is not completed (NO in S54), the forming control unit 71 returns to step S52 and performs the determination. On the other hand, when it is determined in step S54 that forming of all forming data is completed (YES in S54), the forming control unit 71 ends forming control processing.

On the other hand, when it is determined in step S52 that defect information has been input (YES in S52), the forming control unit 71 causes the three-dimensional PBF-AM apparatus 1 to stop forming (S55). After processing of step S55, the forming control unit 71 ends forming control processing.

The defect information determined in step S52 is not output when the area where the defect is detected by the defect detection unit 74 is a defect detection exclusion area. Therefore, according to the present embodiment, forming processing for a formed object having no problem in quality can be prevented from being stopped due to erroneous determination of a defect.

[2. Second Embodiment]

Next, a defect detection method according to the second embodiment of the present invention will be described.

The defect detection method according to the second embodiment is performed using the three-dimensional PBF-AM apparatus 1 according to the first embodiment and the control unit 70 and the recording unit 80 in the PC 54. In addition, in the defect detection method according to the second embodiment, the processing described in example 1 or example 2 of the first embodiment is performed. In the second embodiment, the display control processing illustrated in FIG. 20 and the forming control processing illustrated in FIG. 21 are also performed.

In the first embodiment, an example of receiving setting of a defect detection area in the XY cross section via the defect detection area setting screen Sc1 (refer to FIG. 5) has been described. In the second embodiment, setting of a defect detection area in the Z (lamination) direction is also received. Specifically, setting of a defect detection area around the down skin and/or the up skin is received.

The down skin indicates an area where powder melts for the first time immediately above the powder or immediately above a support (not illustrated) that supports the formed object 38. Since a tendency that an area of several layers from immediately above metal powder is hardly melted cleanly and defects are likely to occur is confirmed, the formed object 38 formed in this area is often excluded from the final formed objects. The formed object 38 formed in the area immediately above the support also often has a portion that is not well peeled off from the support, and is often excluded from the final formed objects. The up skin indicates the final (uppermost) layer of melt in the area of the formed object. A formed object formed in the up skin is a target of a cutting allowance.

In the second embodiment, the display control unit 75 causes the display unit 90 (refer to FIG. 3) to display a screen having a user interface (UI) capable of setting the number of laminated layers from the down skin and/or the number of laminated layers from the up skin, which are targets of a defect detection exclusion area, as a defect detection area setting screen Sc2 (refer to FIG. 22).

2-1. Configuration Example of Defect Detection Area Setting Screen

Next, a configuration example of the defect detection area setting screen Sc2 according to the present embodiment will be described with reference to FIGS. 22 to 24.

FIG. 22 is a diagram illustrating a configuration example of the defect detection area setting screen Sc2. As illustrated in FIG. 22, the defect detection area setting screen Sc2 includes a defect detection area information setting section St1, a selected lamination number display section St2, and a setting information display section St3.

The defect detection area information setting section St1 includes an internal area parameter setting section St11, a peripheral area parameter setting section St12, a defect detection exclusion area information setting section St13, and a defect detection exclusion laminate number setting section St14.

The internal area parameter setting section St11, the peripheral area parameter setting section St12, and the selected lamination number display section St2 of the defect detection area information setting section St1 are the same as those in the first embodiment, and thus, redundant description will be omitted.

In the defect detection exclusion area information setting section St13 (an example of the defect detection exclusion area setting section), information on whether a defect detection exclusion area is set and the position of the defect detection exclusion area when the defect detection exclusion area is set is set.

The number of laminated layers to be excluded from defect detection in an area set in the defect detection exclusion area information setting section St13 is set in the defect detection exclusion laminate number setting section St14 (an example of the second setting section).

Here, the defect detection exclusion area information setting section St13 and the defect detection exclusion laminate number setting section St14 will be described with reference to FIG. 23. FIG. 23 is a diagram illustrating a configuration example of the defect detection exclusion area information setting section St13 and the defect detection exclusion laminate number setting section St14.

The left side of FIG. 23 illustrates a state in which a button of a drop-down list of the defect detection exclusion area information setting section St13 is pressed and a list is displayed. The list includes items of "None", "Down skin", "Up skin", and "Up skin and Down skin". "None" is an option indicating that the defect detection exclusion area is not set. "Down skin" is an option for setting the defect detection exclusion area as an area around the down skin. "Up skin" is an option for setting the defect detection exclusion area as an area around the up skin. "Up skin and down skin" is an option for setting the defect detection exclusion area as both an area around the up skin and an area around the down skin.

Although only one input UI of the defect detection exclusion laminate number setting section St14 is provided in the examples illustrated in FIGS. 22 and 23, in a case where "up skin and down skin" is set in the defect detection exclusion area information setting section St13, the input UI of the defect detection exclusion laminate number setting section St14 may be increased to two. That is, the defect detection area setting screen Sc2 may be configured such that the number of laminated layers as a target of the defect detection exclusion area can be changed between an up skin and a down skin.

The right side of FIG. 23 illustrates a state in which "down skin" is selected in the defect detection exclusion area information setting section St13. The number of laminated layers of the areas selected through the defect detection exclusion area information setting section St13 can be set by the user via the defect detection exclusion laminate number setting section St14. On the right side of FIG. 23, the number "5" is input to the defect detection exclusion laminate number setting section St14. In this case, an area five layers above the down skin including the down skin is set as a defect detection exclusion area.

Returning to FIG. 22, the description will be continued. In the setting information display section St3 of the defect detection area setting screen Sc2, as in the first embodiment, information on the defect detection internal area and the defect detection exclusion area is illustrated in a diagram. In the present embodiment, the display control unit 75 changes the sizes of the defect detection internal area and the defect detection exclusion area illustrated in this drawing in conjunction with the size of the parameter set in the defect detection area information setting section St1. In the setting information display section St3 on the right side of FIG. 22, a state in which the defect detection internal area is reduced and the defect detection exclusion area is increased according to various parameters set by the defect detection area information setting section St1 illustrated on the left side of FIG. 22 is illustrated. By performing such display, the user can easily and sensuously ascertain how the sizes of the defect detection internal area and the defect detection exclusion area change on the basis of the parameter operation. In addition, the user can appropriately set the parameters while checking that the sizes of the defect detection internal area and the defect detection exclusion area change.

FIG. 24 is a diagram illustrating a configuration example of a setting confirmation screen Sc3 of the defect detection exclusion area. The setting confirmation screen Sc3 of the defect detection exclusion area illustrates a target area and the number of laminated layers of the defect detection exclusion area set on the defect detection area setting screen Sc2. In the upper part of FIG. 24, a method of counting the number of laminated layers of the defect detection exclusion areas is described. It is indicated below that setting of the defect detection exclusion area is "ON" and the number of defect detection exclusion layers is set to "3".

Below that, explanation diagrams of the defect detection exclusion area and the defect detection area are displayed. In the leftmost column of the explanation diagram, layer numbers (Layer N-i (i is an integer of 1 or more)) are described. In the right column, a defect detection exclusion area and a defect detection area for each formed object are illustrated in different colors. In any formed object shown in the explanation diagram, it is shown that an area of three layers including the down skin upward from the down skin is set as a defect detection exclusion area, and an area above the area is set as a defect detection area. As shown in the explanation diagram, the defect detection exclusion area and the defect detection area may be mixed in the same layer depending on the shape of the formed object 38.

By displaying such an explanation on the setting confirmation screen Sc3, the user can visually and easily check the meaning of the defect detection area and the defect detection exclusion area, whether the content set by input of the parameter is as intended, and the like.

[3. Modified Examples]

In each of the above-described embodiments, an example has been described in which the defect detection unit 74 also performs defect detection in the defect detection exclusion area set by the defect detection area setting unit 72, but the present invention is not limited thereto. The defect detection unit 74 may not detect a defect in the defect detection exclusion area. Alternatively, the defect detection unit 74 may detect only a defect in the defect detection exclusion area (defect detection peripheral area) set for the XY cross section in example 1 of the first embodiment, and may not perform defect detection for defect candidates integrated in the layer direction set in example 2.

The defect detection exclusion area may be set by freely combining the defect detection peripheral area with respect to the XY cross section described in the first embodiment and the defect detection area around the up skin and/or the down skin in the layer direction described in the second embodiment.

The various parameters used to set the defect detection area and the defect detection exclusion area may have different values for each formed object, each range of the layer, or the like.

Furthermore, in each embodiment described above, an example in which the present invention is applied to forming control software dedicated to forming used in the powder bed type three-dimensional additive manufacturing device has been described. However, it is not necessary to limit the forming beam to the electron beam method, and the present invention may be applied to forming control software of a forming device including other methods such as a laser method.

In addition, in each of the above-described embodiments, it has been described that identified defect candidates and detected defects are displayed as a BSE image on the BSE monitor 55, but the defect candidates and the BSE image may be displayed as a camera image captured by the camera 42.

In each of the embodiments described above, defect candidate identification and defect detection are performed in the middle of PBF-AM processing, but defect candidate identification and defect detection may be performed after end of the manufacturing processing.

That is, the defect candidate identification unit 73 and the defect detection unit 74 can operate either in the middle of PBF-AM processing or after PBF-AM processing.

Furthermore, since the accuracy of defect detection is enhanced by the detection method in each embodiment described above, a process of further performing an X-ray inspection Computed Tomography (CT) inspection on the formed object 38 can be omitted.

Note that the present invention is not limited to the above-described embodiments, and it goes without saying that various other application examples and modifications can be taken without departing from the present invention described in the claims.

For example, in each of the above-described embodiments, the configurations of the forming control software of the three-dimensional PBF-AM apparatus 1 and the PC 54 are described in detail and specifically in order to describe the present invention in an easily understandable manner, and the present invention is not necessarily limited to those having all the described configurations. In addition, a part of the configuration of the embodiment described here can be replaced with the configuration of another embodiment, and furthermore, the configuration of another embodiment can be added to the configuration of an embodiment. In addition, it is also possible to add, delete, and replace other configurations for a part of the configuration of each embodiment.

In addition, the control lines and the information lines indicate what is considered to be necessary for the description, and do not necessarily indicate all the control lines and the information lines on the product. In practice, it may be considered that almost all the configurations are connected to each other.

Reference Signs List

1 Three-dimensional PBF-AM apparatus
2 Beam radiation device
15 Electron beam
18 Build table
32 Powder material
35 Pre-sintered body

38 Formed object
42 Camera
46 Detection unit
54 PC
55 BSE monitor
60 Input unit
70 Control unit
71 Forming control unit
72 Defect detection area setting unit
73 Defect candidate identification unit
74 Defect detection unit
75 Display control unit
80 Recording unit
81 Parameter recording unit
82 Defect related information recording unit
90 Display unit
Sc1, Sc2 Defect detection area setting screen
St11 Internal area parameter setting section
St12 Peripheral area parameter setting section
St13 Defect detection exclusion area information setting section
St14 Defect detection exclusion laminate number setting section
St3 Setting information display section

## Claims

**1.** An information processing apparatus comprising:

a defect detection area setting unit (72) configured to set, on the basis of information input from an input unit (60), an area inside a predetermined amount from a surface of a formed object manufactured by a three-dimensional powder bed fusion additive manufacturing (PBF-AM) apparatus (1) as a defect detection area; and
a defect detection unit (74) configured to detect a defect present in the formed object on the basis of layer data obtained for each layer in which the formed object is powder-bed-fusion additively manufactured, to identify a defect detected in the defect detection area as a defect leading to a quality defect, and to output defect information on the identified defect.

**2.** The information processing apparatus according to claim 1, further comprising a display control unit (75) configured to cause a display unit (90) to display a defect detection area setting screen (Sc1) for setting the defect detection area, wherein the defect detection area setting screen (Sc1) includes a first setting section (St11) for setting the predetermined amount when a boundary between the formed object and a powder bed in an XY cross section of the formed object is set as a starting point.

**3.** The information processing apparatus according to claim 2,
wherein the defect detection area setting screen (Sc1) includes a defect detection exclusion area setting section (St12) for setting a defect detection exclusion area that is an area where the defect detection unit (74) does not identify a defect leading to a quality defect.

**4.** The information processing apparatus according to claim 3,
wherein the defect detection exclusion area setting section (St12) includes a second setting section (St14) for setting the predetermined amount when a down skin of the formed object is set as a starting point and/or the predetermined amount when an up skin of the formed object is set as a starting point.

**5.** The information processing apparatus according to claim 4,
wherein the second setting section (St14) receives an input of the number of layers, which is the number of layers to be laminated in the PBF-AM, as the predetermined amount.

**6.** The information processing apparatus according to claim 4,

wherein the defect detection area setting screen (Sc1) includes a setting information display section (St3) for displaying the defect detection area and the defect detection exclusion area in a diagram, and
the display control unit (75) changes sizes of the defect detection area and the defect detection exclusion area displayed on the setting information display section (St3) in conjunction with sizes of predetermined amounts input to the first setting section (St11) and the second setting section (St14).

**7.** The information processing apparatus according to any one of claims 1 to 6, further comprising a forming control unit (71) configured to stop the PBF-AM operation when the defect detection unit (74) identifies a defect leading to a quality defect,
wherein, when the defect is detected by the defect detection unit (74) in the defect detection exclusion area, the forming control unit (71) continues the manufacturing operation by the three-dimensional PBF-AM apparatus (1).

**8.** The information processing apparatus according to claim 7, further comprising a defect candidate identification unit (73) configured to detect a defective portion generated in the layer as a defect candidate for each layer on the basis of the layer data and to identify a plurality of defect candidates at substantially the same positions in a plurality of layers adjacent in a lamination direction,
wherein the defect detection unit (73) detects the defect on the basis of sizes in the lamination direction and sizes in the layers of the plurality of defect candidates located at the substantially same positions identified in the plurality of layers.

**9.** A defect detection method performed by a defect detection area setting unit (72) and a defect detection unit (74) included in an information processing apparatus, the method comprising:

setting, by the defect detection area setting unit (72), as a defect detection area, an area inside a predetermined amount from a surface of a formed object manufactured by a three-dimensional PBF-AM apparatus (1) on the basis of information input from an input unit (60); and
detecting, by the defect detection unit (74), a defect present in the formed object on the basis of layer data obtained for each layer in which the formed object is powder-bed-fusion additively manufactured, identifying a defect detected in the defect detection area as a defect leading to a quality defect, and outputting defect information on the identified defect.

**10.** A three-dimensional PBF-AM apparatus comprising:

a build plate (22) on which a powder bed is formed, the powder bed being spread with a powder material;
a powder supply system (16) configured to spread the powder material on the powder bed;
a beam radiation unit (2) configured to radiate forming beam to the powder material spread on the powder bed;
an electron optical system configured to scan the forming beam according to melting conditions for melting the powder material to melt the powder material spread on the powder bed;
a defect detection area setting unit (72) configured to set, on the basis of information input from an input unit (60), an area inside a predetermined amount from a surface of a formed object manufactured by a three-dimensional PBF-AM apparatus (1) as a defect detection area;
a defect detection unit (74) configured to detect a defect present in the formed object on the basis of layer data obtained for each layer in which the formed object is powder-bed-fusion additively manufactured, to identify a defect detected in the defect detection area as a defect leading to a quality defect, and to output defect information on the identified defect.

FIG. 1

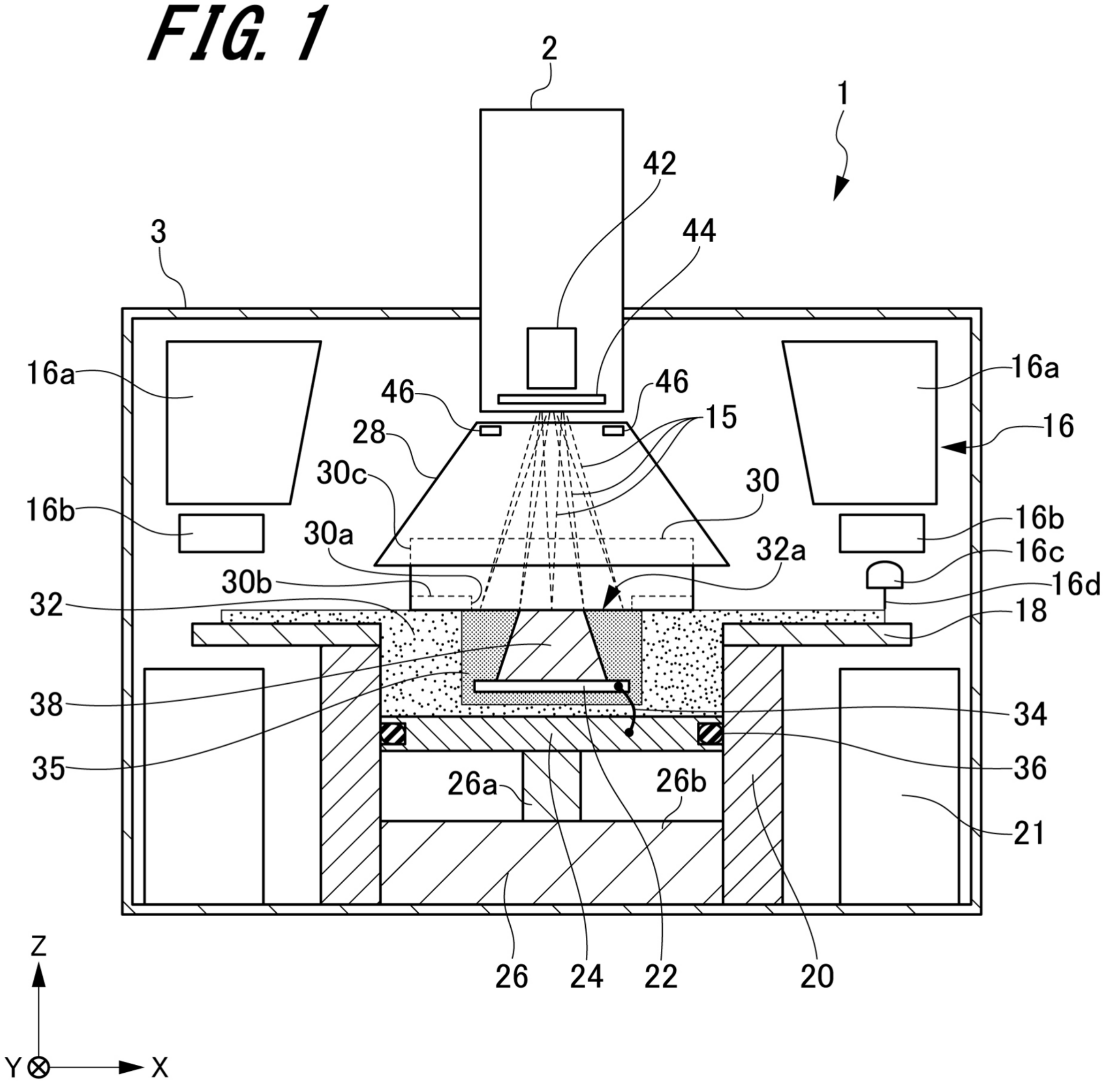
2
1
42
44
3
16a
16a
46
46
15
16
28
30c
30
16b
16b
30a
32a
16c
30b
16d
32
18
38
34
35
36
26a
26b
21
26
24
22
20
Z
Y
X

FIG. 2

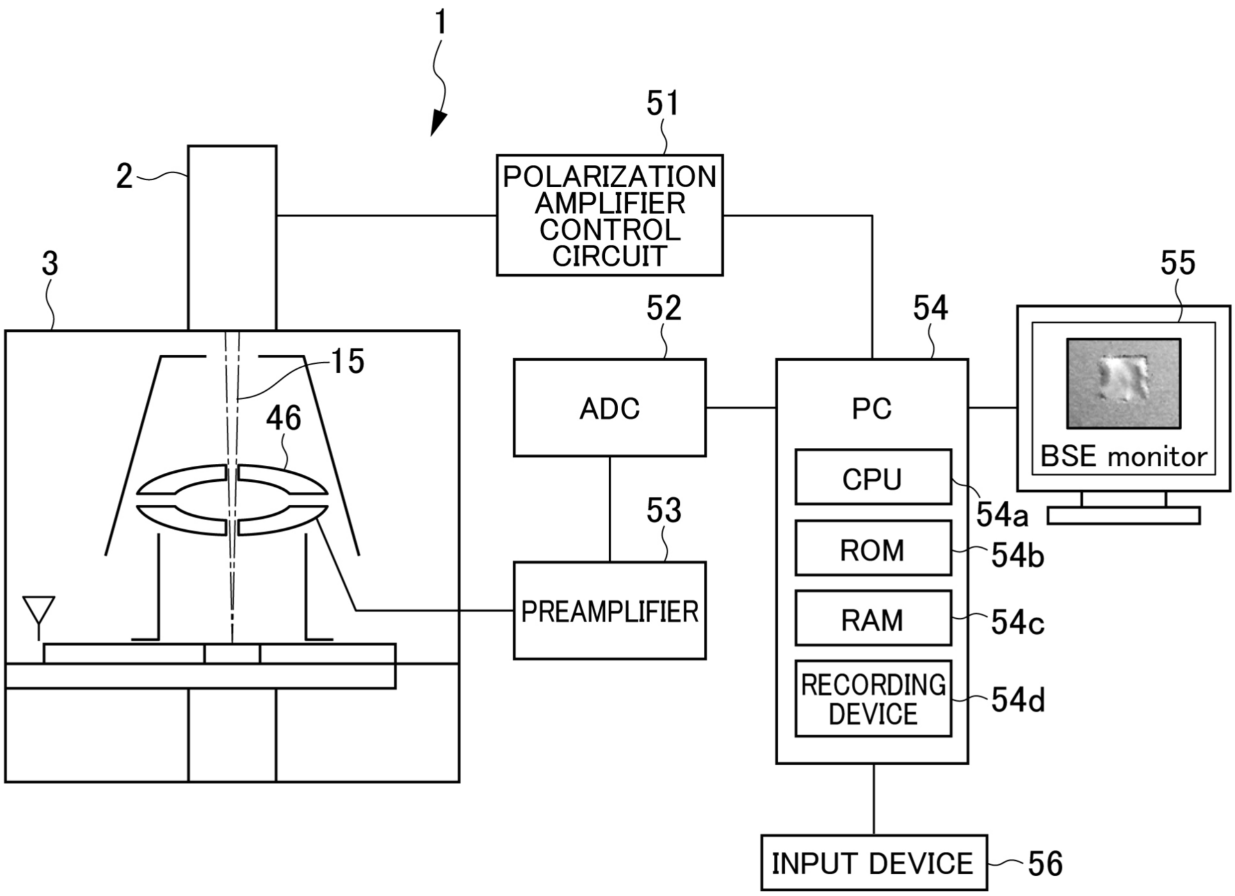
1
2
3
15
46
51
POLARIZATION AMPLIFIER CONTROL CIRCUIT
52
ADC
53
PREAMPLIFIER
54
PC
CPU
54a
ROM
54b
RAM
54c
RECORDING DEVICE
54d
55
BSE monitor
INPUT DEVICE
56

FIG. 3

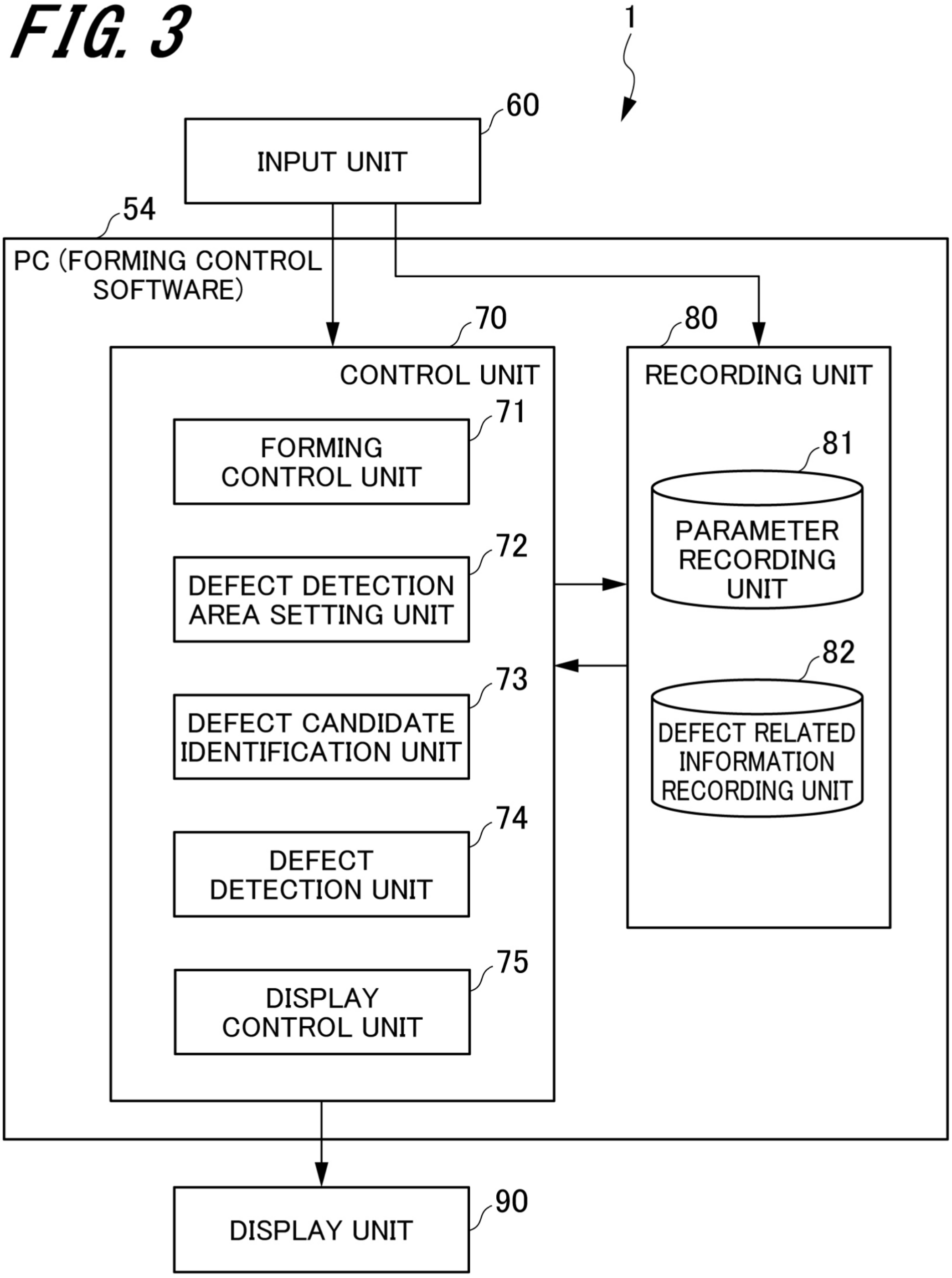
1
60
INPUT UNIT
54
PC (FORMING CONTROL SOFTWARE)
70
CONTROL UNIT
71
FORMING CONTROL UNIT
72
DEFECT DETECTION AREA SETTING UNIT
73
DEFECT CANDIDATE IDENTIFICATION UNIT
74
DEFECT DETECTION UNIT
75
DISPLAY CONTROL UNIT
80
RECORDING UNIT
81
PARAMETER RECORDING UNIT
82
DEFECT RELATED INFORMATION RECORDING UNIT
90
DISPLAY UNIT

FIG. 4

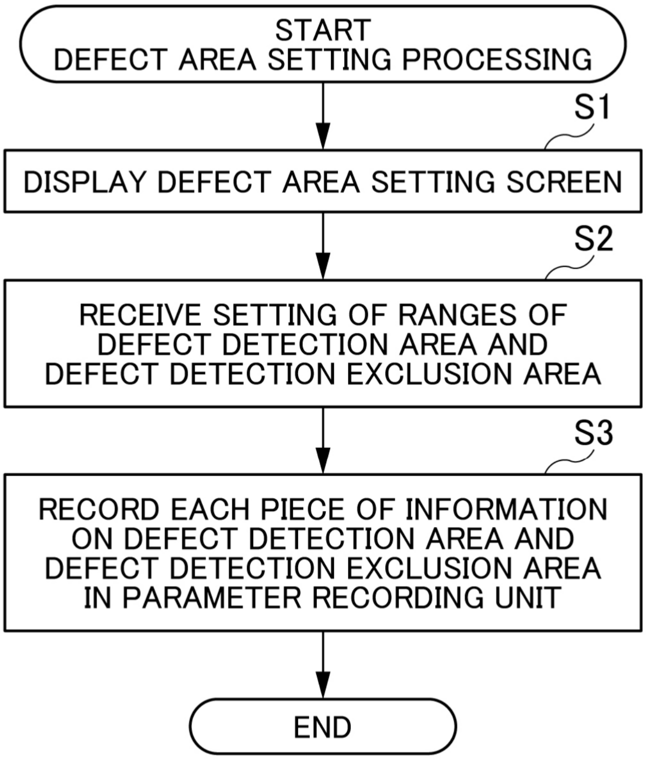
START
DEFECT AREA SETTING PROCESSING
S1
DISPLAY DEFECT AREA SETTING SCREEN
S2
RECEIVE SETTING OF RANGES OF DEFECT DETECTION AREA AND DEFECT DETECTION EXCLUSION AREA
S3
RECORD EACH PIECE OF INFORMATION ON DEFECT DETECTION AREA AND DEFECT DETECTION EXCLUSION AREA IN PARAMETER RECORDING UNIT
END

FIG. 5

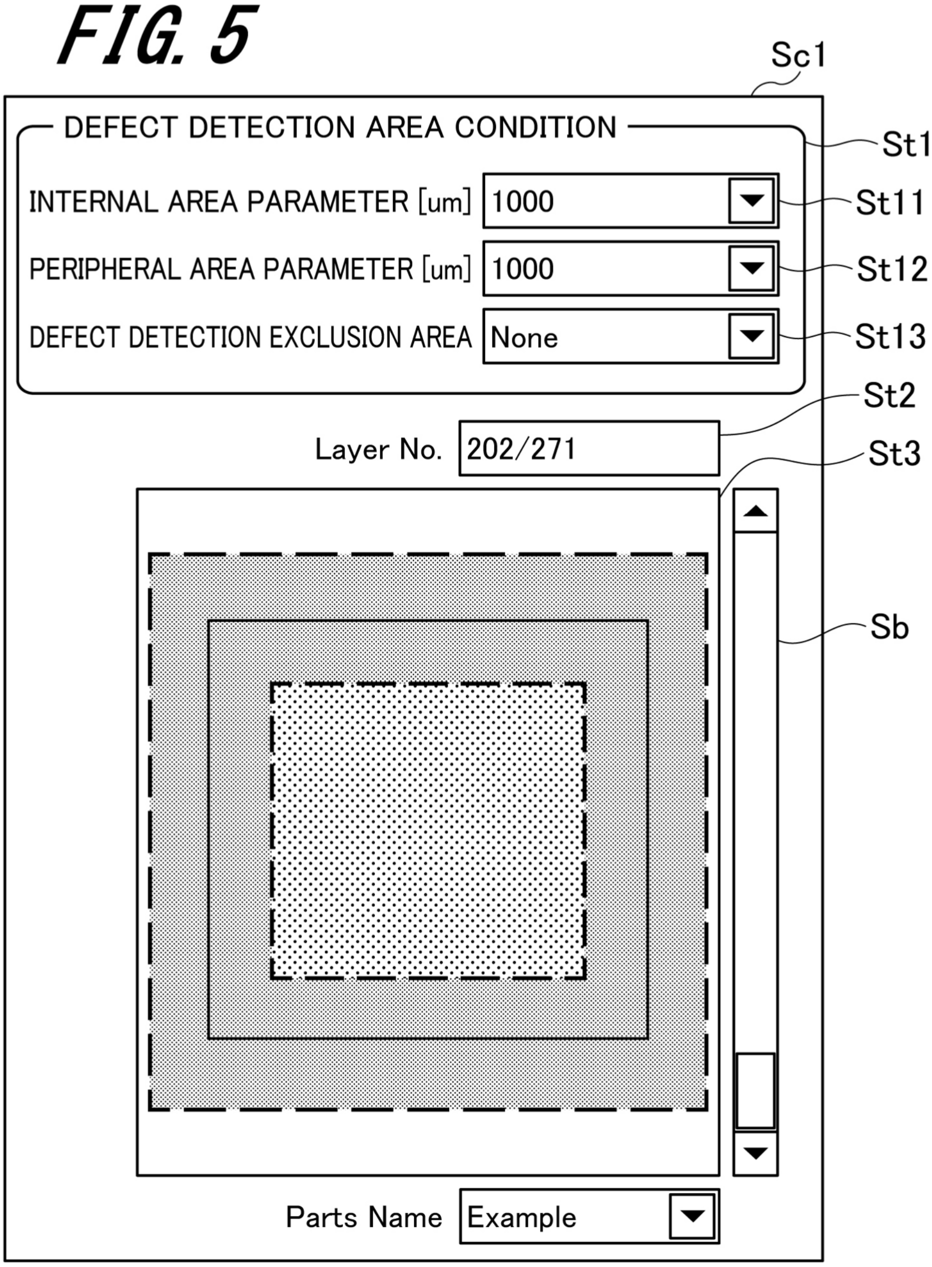
Sc1
DEFECT DETECTION AREA CONDITION
St1
INTERNAL AREA PARAMETER [um]
1000
St11
PERIPHERAL AREA PARAMETER [um]
1000
St12
DEFECT DETECTION EXCLUSION AREA
None
St13
St2
Layer No.
202/271
St3
Sb
Parts Name
Example

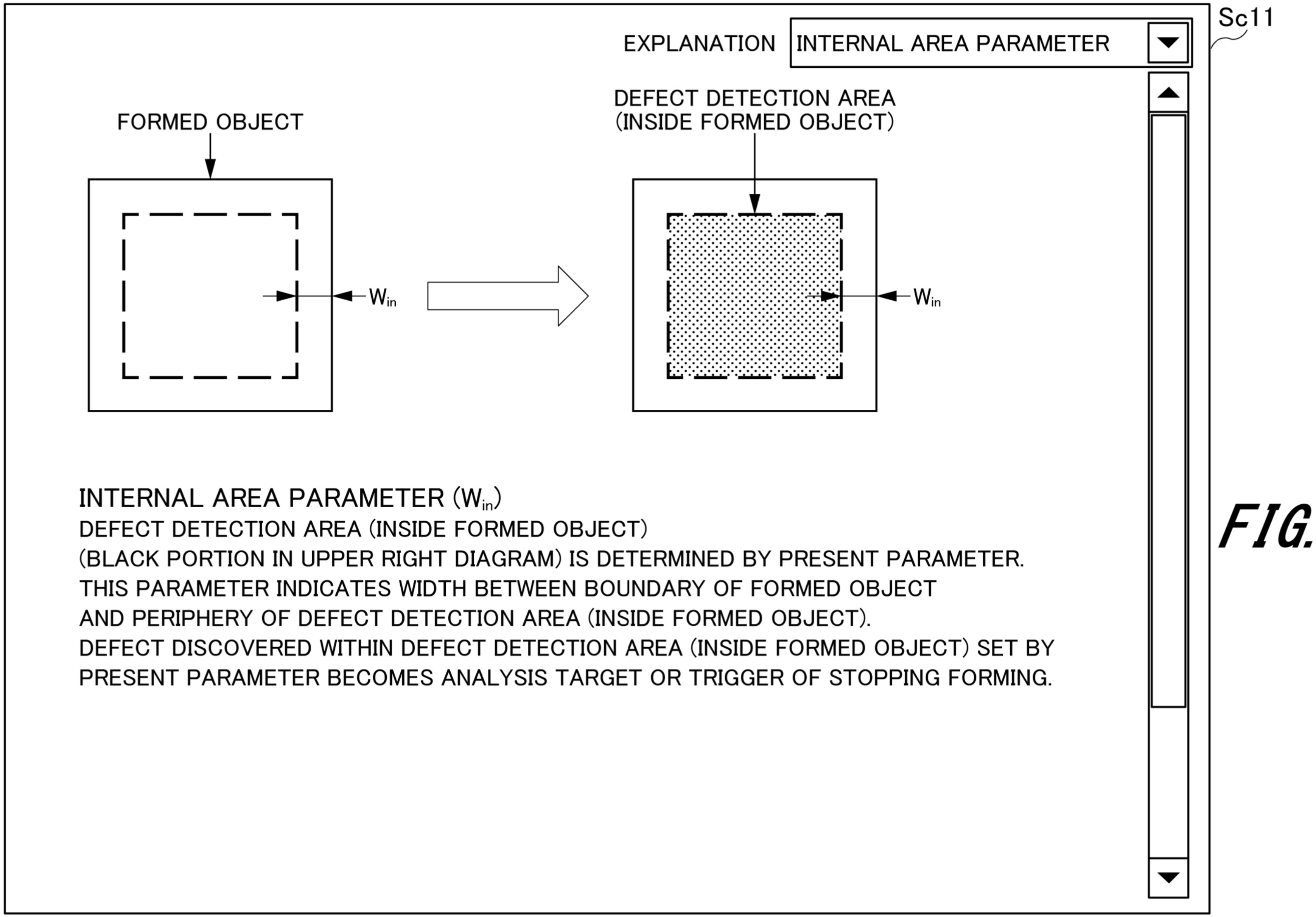
Sc11
EXPLANATION
INTERNAL AREA PARAMETER
FORMED OBJECT
DEFECT DETECTION AREA
(INSIDE FORMED OBJECT)
$W_{in}$
$W_{in}$
INTERNAL AREA PARAMETER ($W_{in}$)
DEFECT DETECTION AREA (INSIDE FORMED OBJECT)
(BLACK PORTION IN UPPER RIGHT DIAGRAM) IS DETERMINED BY PRESENT PARAMETER.
THIS PARAMETER INDICATES WIDTH BETWEEN BOUNDARY OF FORMED OBJECT
AND PERIPHERY OF DEFECT DETECTION AREA (INSIDE FORMED OBJECT).
DEFECT DISCOVERED WITHIN DEFECT DETECTION AREA (INSIDE FORMED OBJECT) SET BY
PRESENT PARAMETER BECOMES ANALYSIS TARGET OR TRIGGER OF STOPPING FORMING.

FIG. 6

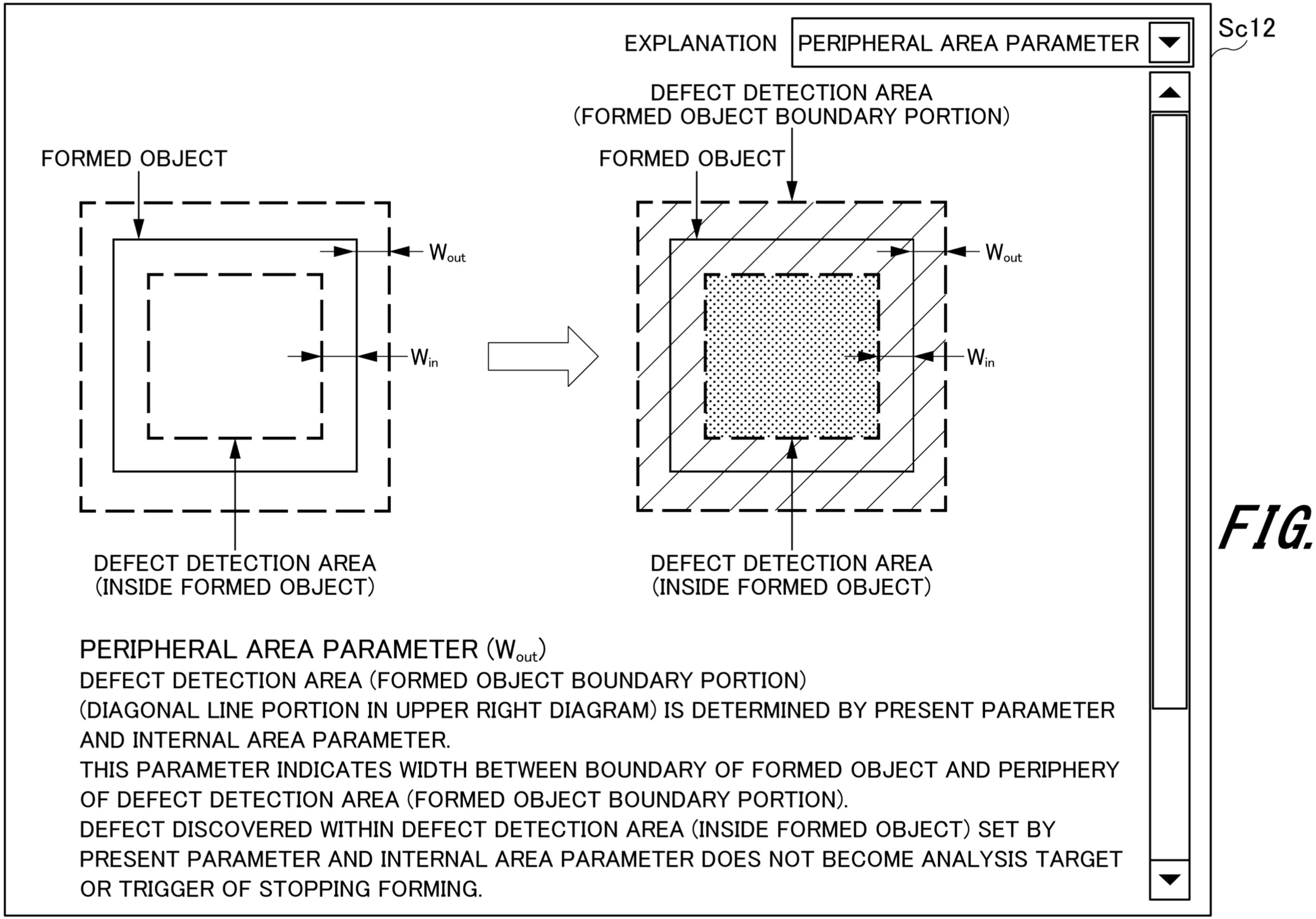

Sc12
EXPLANATION
PERIPHERAL AREA PARAMETER
DEFECT DETECTION AREA
(FORMED OBJECT BOUNDARY PORTION)
FORMED OBJECT
FORMED OBJECT
$W_{out}$
$W_{in}$
$W_{out}$
$W_{in}$
DEFECT DETECTION AREA
(INSIDE FORMED OBJECT)
DEFECT DETECTION AREA
(INSIDE FORMED OBJECT)
PERIPHERAL AREA PARAMETER ($W_{out}$)
DEFECT DETECTION AREA (FORMED OBJECT BOUNDARY PORTION)
(DIAGONAL LINE PORTION IN UPPER RIGHT DIAGRAM) IS DETERMINED BY PRESENT PARAMETER
AND INTERNAL AREA PARAMETER.
THIS PARAMETER INDICATES WIDTH BETWEEN BOUNDARY OF FORMED OBJECT AND PERIPHERY
OF DEFECT DETECTION AREA (FORMED OBJECT BOUNDARY PORTION).
DEFECT DISCOVERED WITHIN DEFECT DETECTION AREA (INSIDE FORMED OBJECT) SET BY
PRESENT PARAMETER AND INTERNAL AREA PARAMETER DOES NOT BECOME ANALYSIS TARGET
OR TRIGGER OF STOPPING FORMING.


FIG. 7

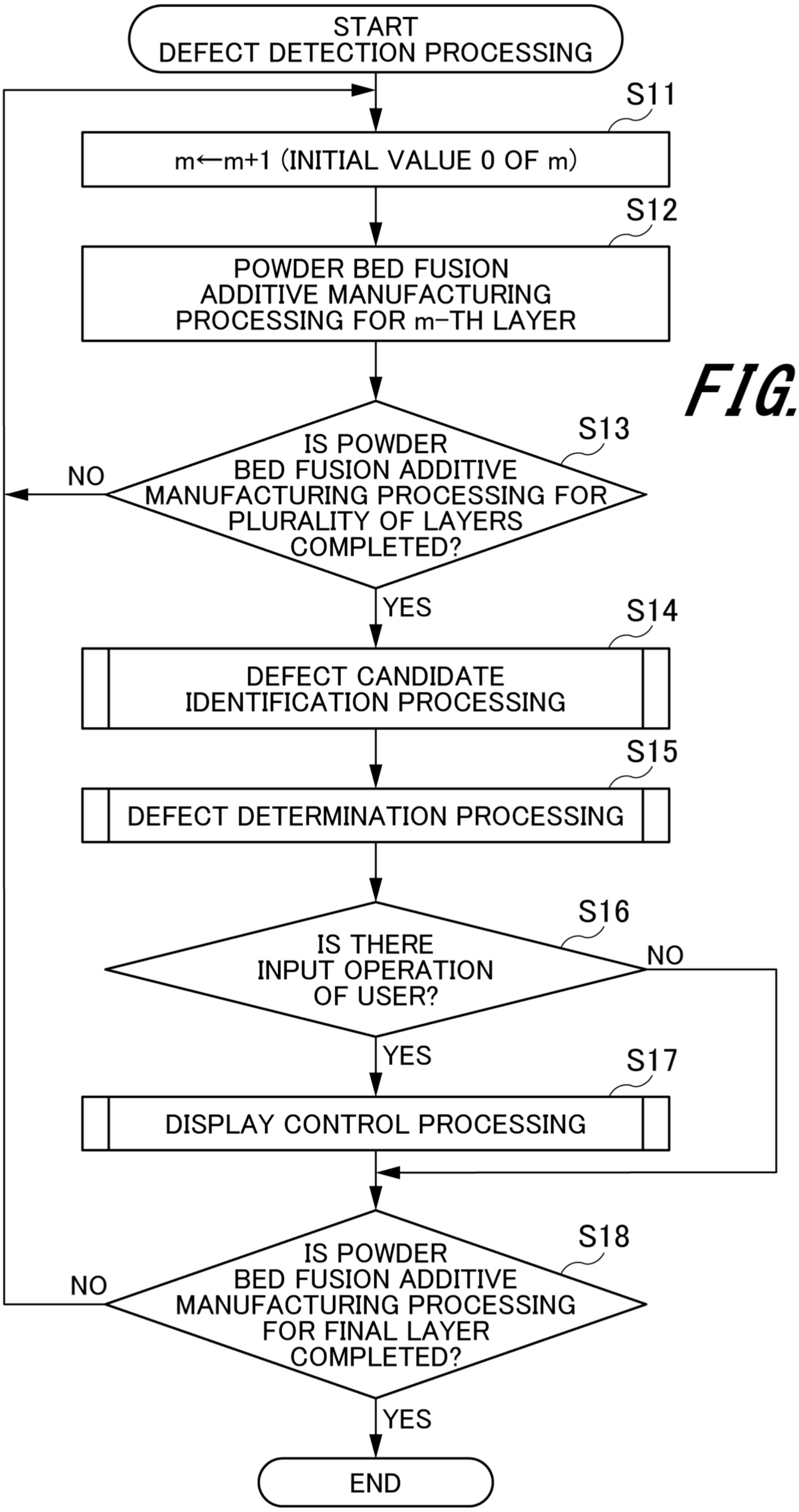
START
DEFECT DETECTION PROCESSING
S11
m←m+1 (INITIAL VALUE 0 OF m)
S12
POWDER BED FUSION ADDITIVE MANUFACTURING PROCESSING FOR m-TH LAYER
S13
IS POWDER BED FUSION ADDITIVE MANUFACTURING PROCESSING FOR PLURALITY OF LAYERS COMPLETED?
NO
YES
S14
DEFECT CANDIDATE IDENTIFICATION PROCESSING
S15
DEFECT DETERMINATION PROCESSING
S16
IS THERE INPUT OPERATION OF USER?
NO
YES
S17
DISPLAY CONTROL PROCESSING
S18
IS POWDER BED FUSION ADDITIVE MANUFACTURING PROCESSING FOR FINAL LAYER COMPLETED?
NO
YES
END

FIG. 8

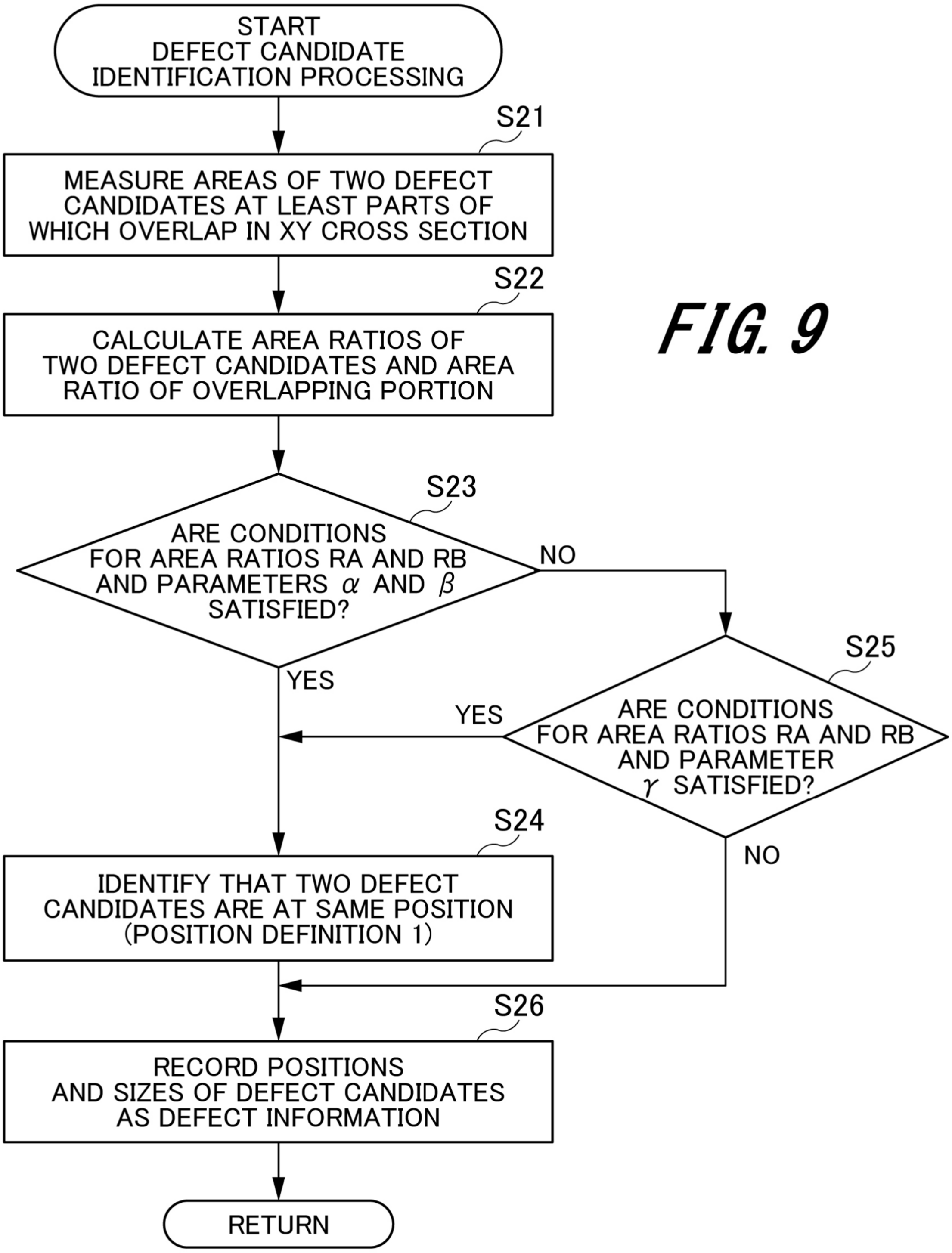
START
DEFECT CANDIDATE
IDENTIFICATION PROCESSING
S21
MEASURE AREAS OF TWO DEFECT CANDIDATES AT LEAST PARTS OF WHICH OVERLAP IN XY CROSS SECTION
S22
CALCULATE AREA RATIOS OF TWO DEFECT CANDIDATES AND AREA RATIO OF OVERLAPPING PORTION
S23
ARE CONDITIONS FOR AREA RATIOS RA AND RB AND PARAMETERS α AND β SATISFIED?
NO
YES
S25
ARE CONDITIONS FOR AREA RATIOS RA AND RB AND PARAMETER γ SATISFIED?
YES
NO
S24
IDENTIFY THAT TWO DEFECT CANDIDATES ARE AT SAME POSITION (POSITION DEFINITION 1)
S26
RECORD POSITIONS AND SIZES OF DEFECT CANDIDATES AS DEFECT INFORMATION
RETURN

FIG. 9

FIG. 10

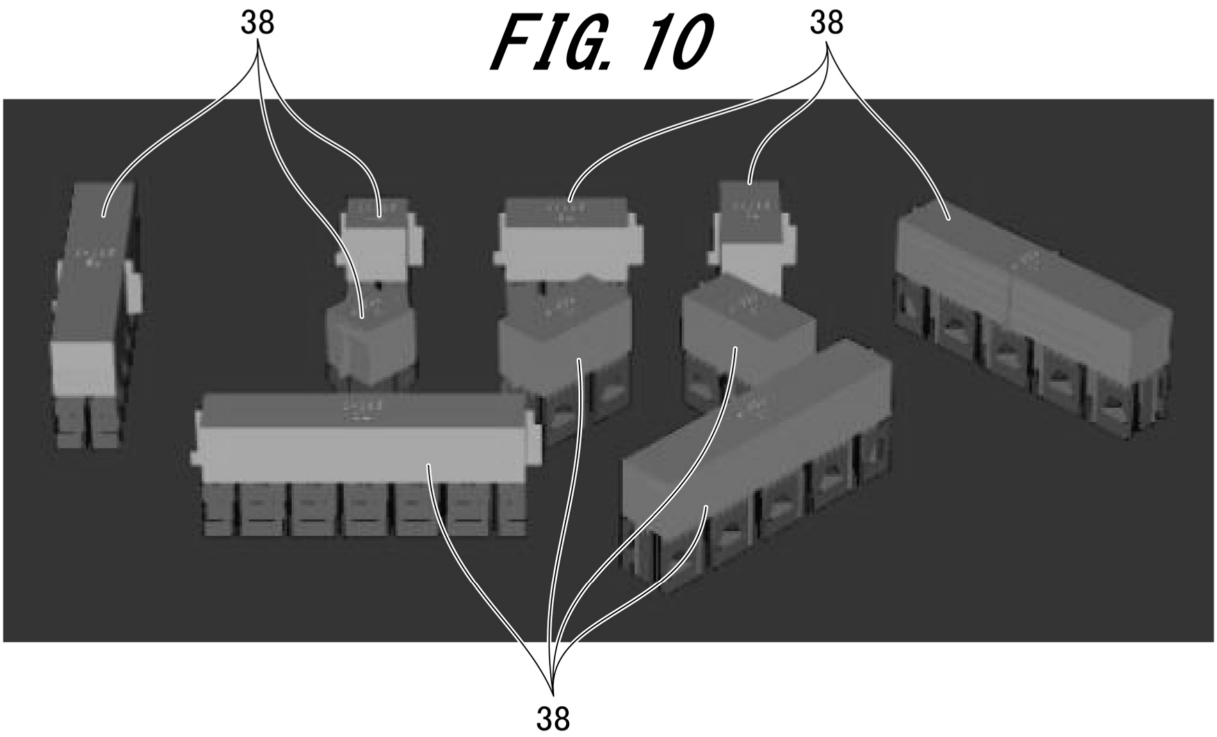


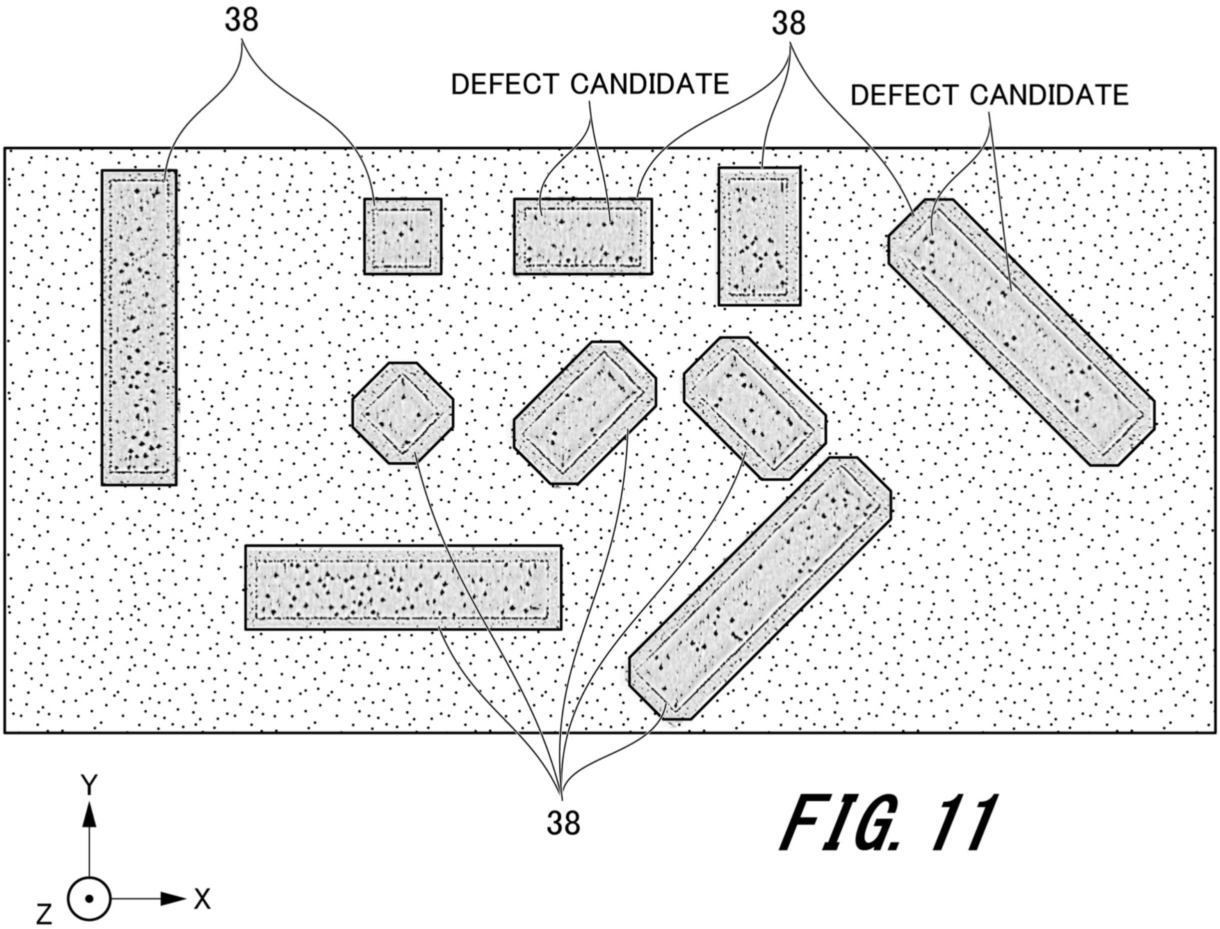


FIG. 11

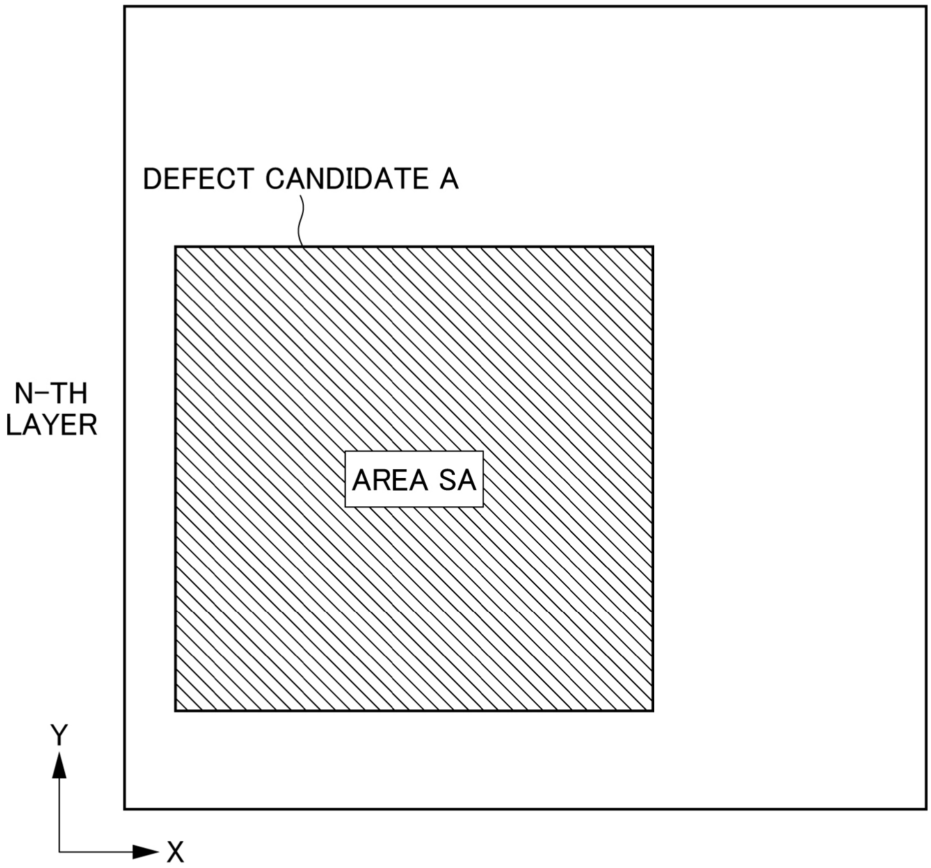
DEFECT CANDIDATE A
N-TH
LAYER
AREA SA
Y
X

FIG. 12

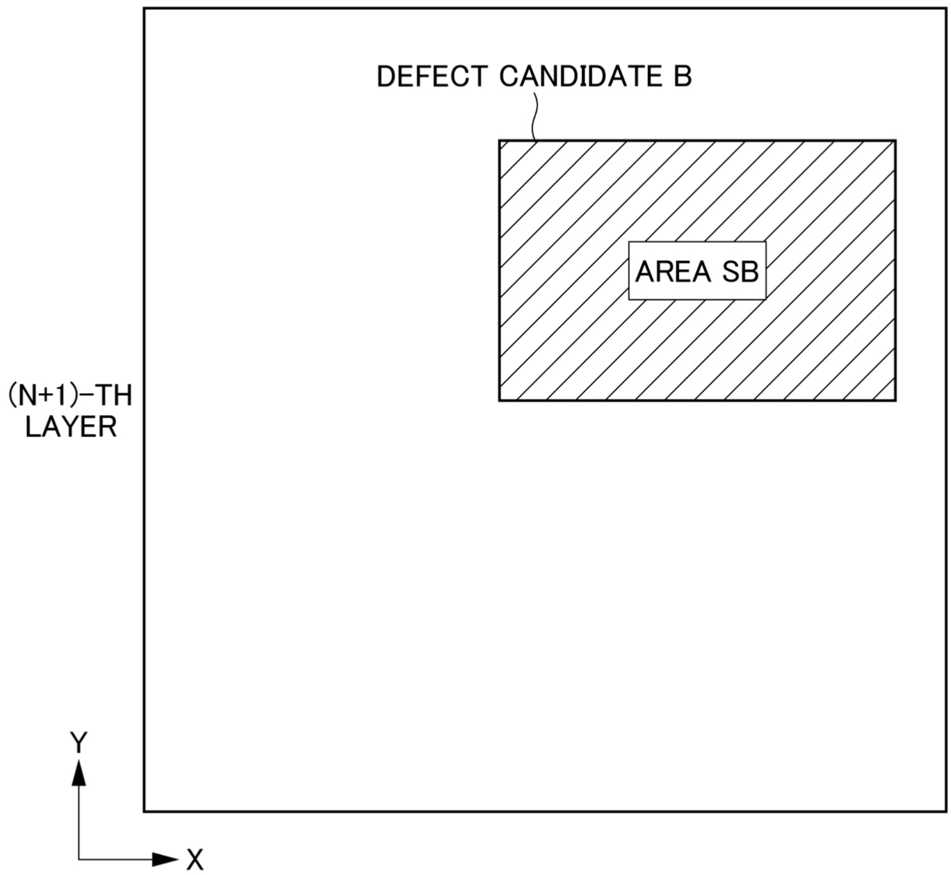
DEFECT CANDIDATE B
AREA SB
(N+1)-TH
LAYER
Y
X

FIG. 13

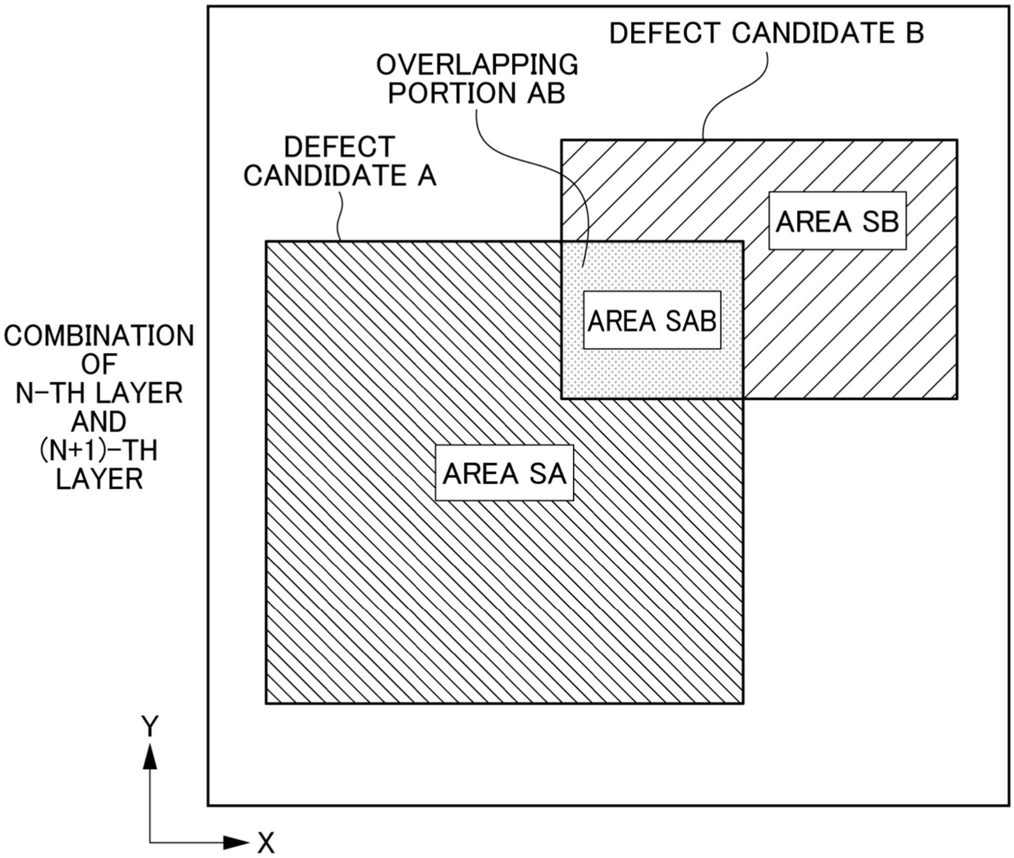
DEFECT CANDIDATE B
OVERLAPPING PORTION AB
DEFECT CANDIDATE A
AREA SB
AREA SAB
COMBINATION OF N-TH LAYER AND (N+1)-TH LAYER
AREA SA
Y
X

FIG. 14

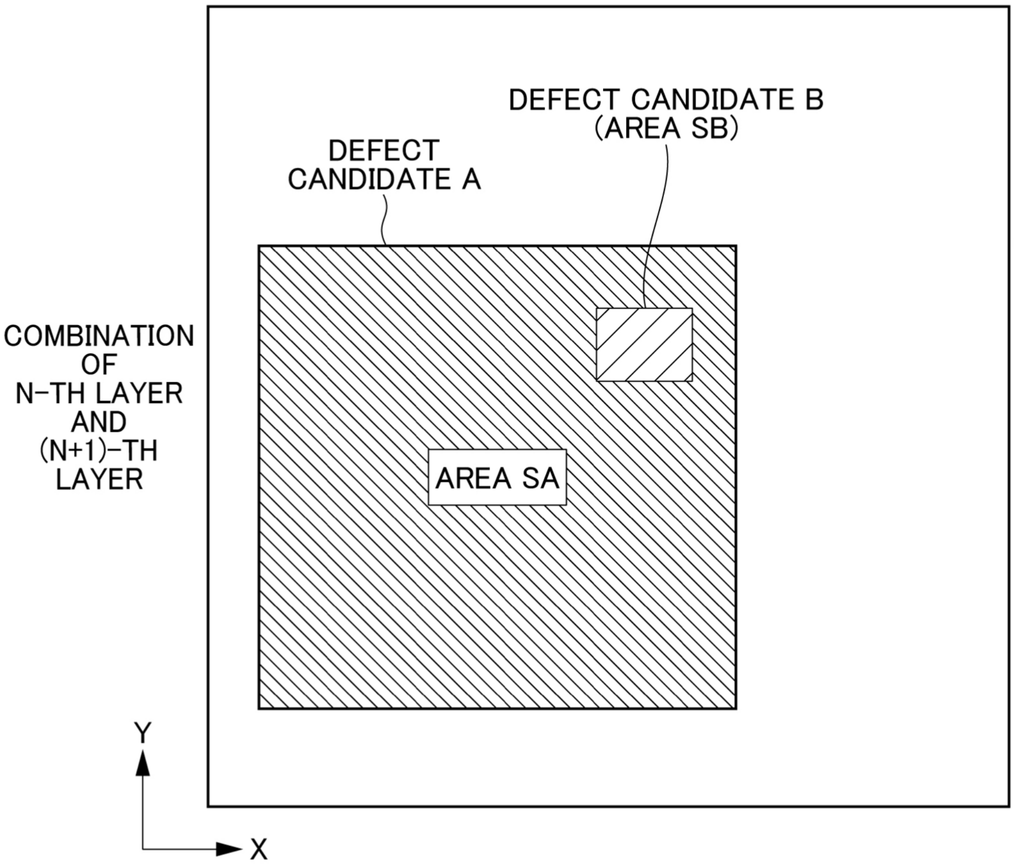
DEFECT CANDIDATE B (AREA SB)
DEFECT CANDIDATE A
COMBINATION OF N-TH LAYER AND (N+1)-TH LAYER
AREA SA
Y
X

FIG. 15

FIG. 16

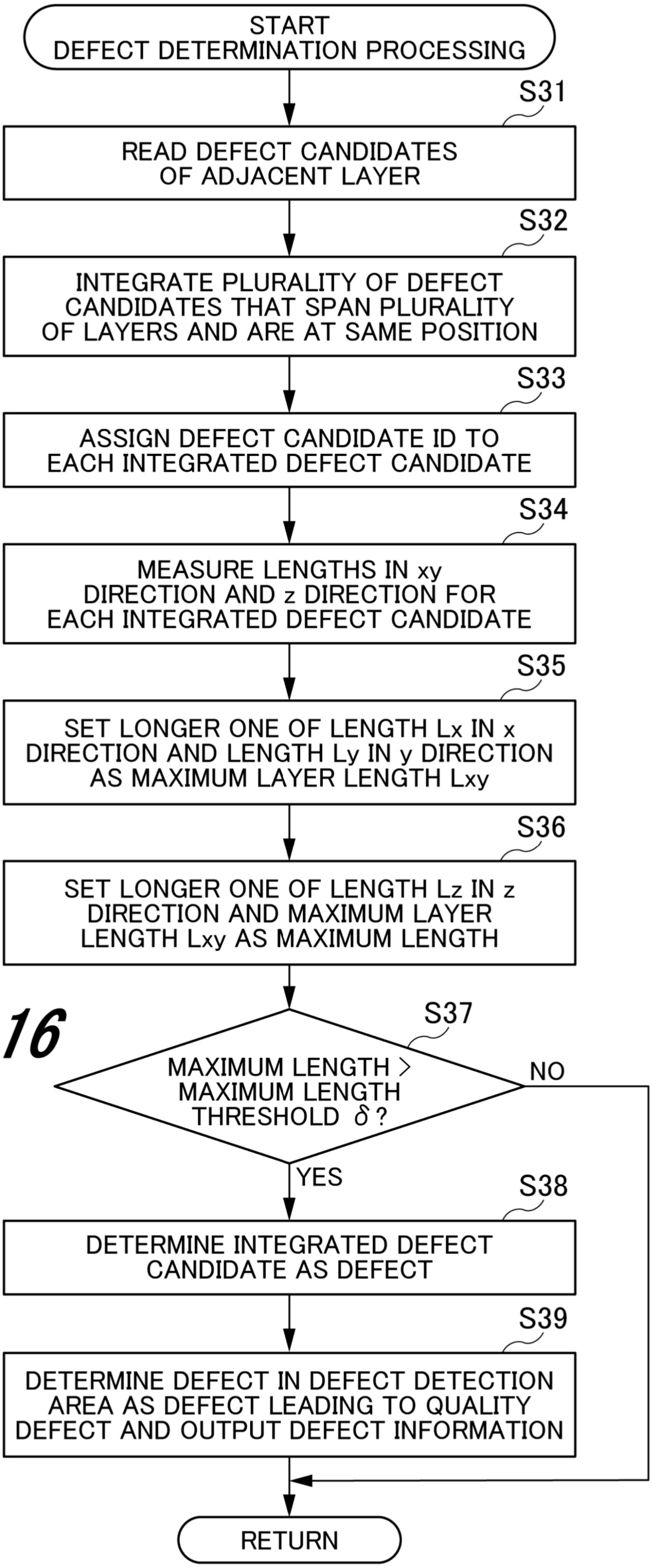
START
DEFECT DETERMINATION PROCESSING
S31
READ DEFECT CANDIDATES OF ADJACENT LAYER
S32
INTEGRATE PLURALITY OF DEFECT CANDIDATES THAT SPAN PLURALITY OF LAYERS AND ARE AT SAME POSITION
S33
ASSIGN DEFECT CANDIDATE ID TO EACH INTEGRATED DEFECT CANDIDATE
S34
MEASURE LENGTHS IN xy DIRECTION AND z DIRECTION FOR EACH INTEGRATED DEFECT CANDIDATE
S35
SET LONGER ONE OF LENGTH Lx IN x DIRECTION AND LENGTH Ly IN y DIRECTION AS MAXIMUM LAYER LENGTH Lxy
S36
SET LONGER ONE OF LENGTH Lz IN z DIRECTION AND MAXIMUM LAYER LENGTH Lxy AS MAXIMUM LENGTH
S37
MAXIMUM LENGTH > MAXIMUM LENGTH THRESHOLD δ?
NO
YES
S38
DETERMINE INTEGRATED DEFECT CANDIDATE AS DEFECT
S39
DETERMINE DEFECT IN DEFECT DETECTION AREA AS DEFECT LEADING TO QUALITY DEFECT AND OUTPUT DEFECT INFORMATION
RETURN

FIG. 17

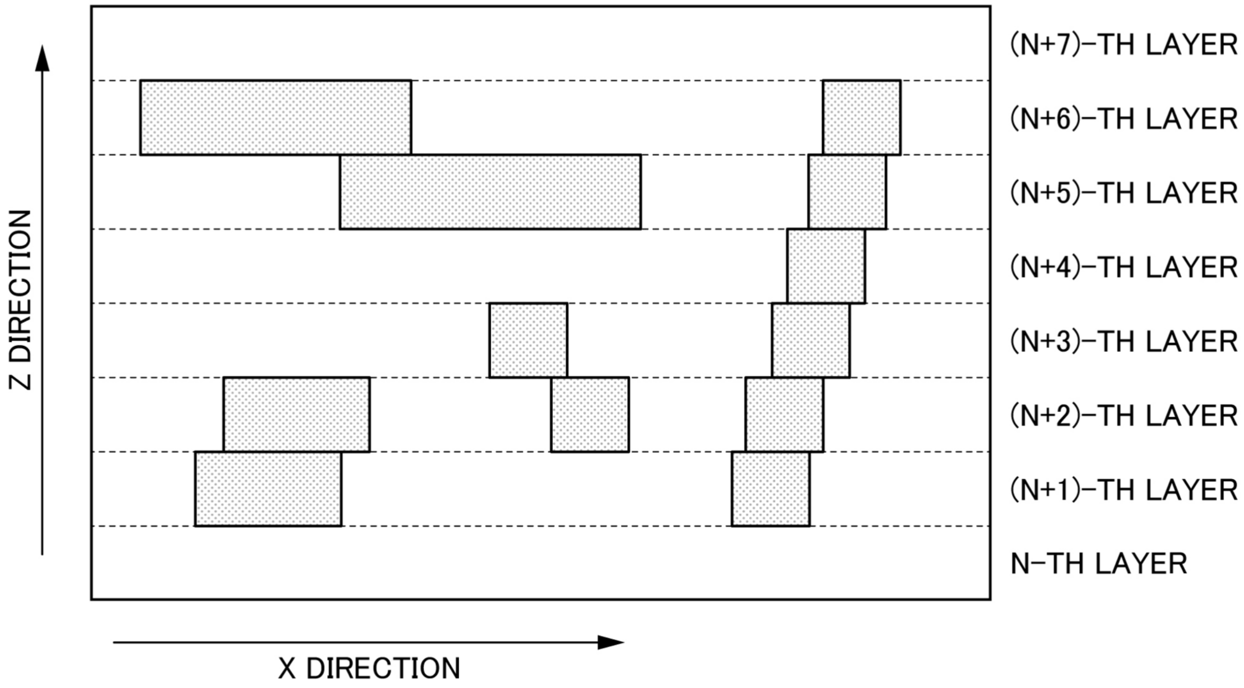
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
Z DIRECTION
X DIRECTION

FIG. 18

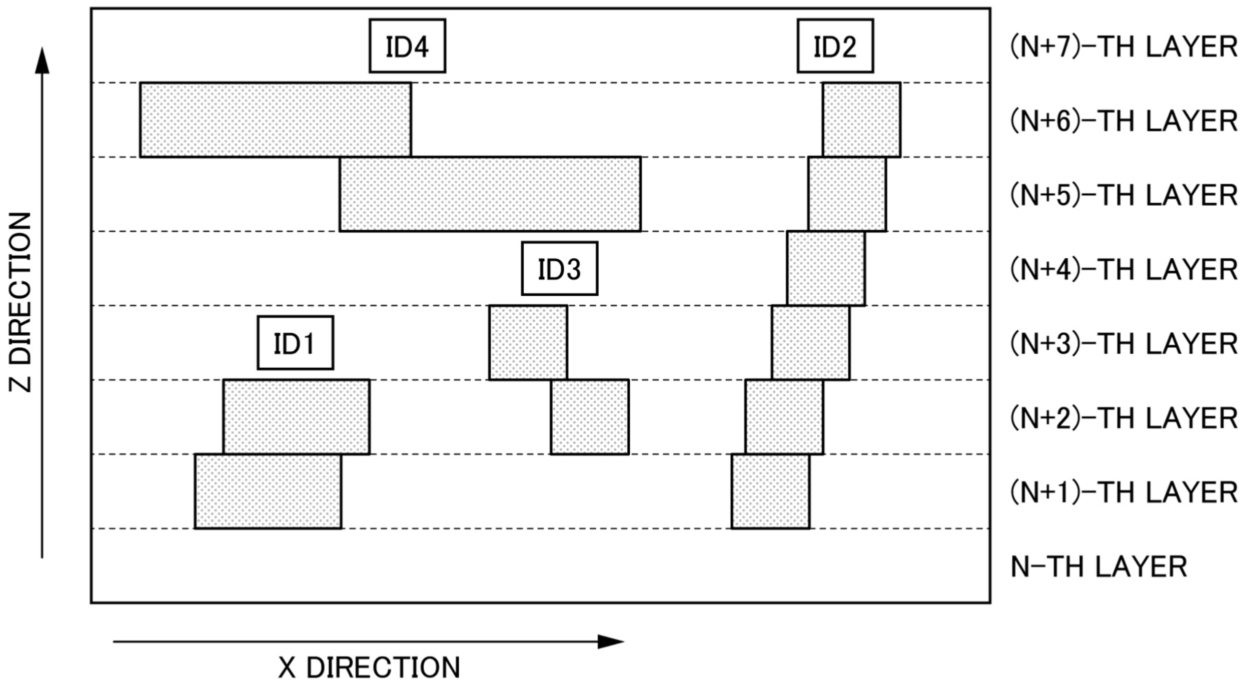
ID4
ID2
ID3
ID1
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
Z DIRECTION
X DIRECTION

FIG. 19

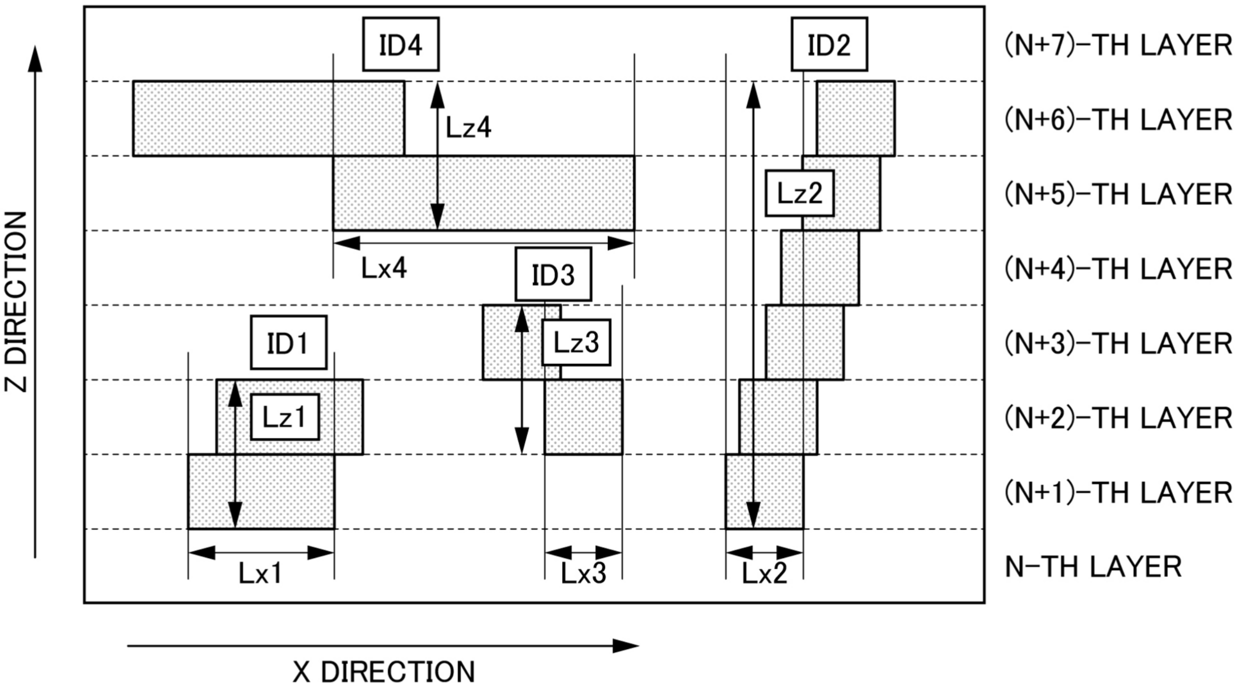
ID4
ID2
Lz4
Lz2
Lx4
ID3
ID1
Lz3
Lz1
Lx1
Lx3
Lx2
(N+7)-TH LAYER
(N+6)-TH LAYER
(N+5)-TH LAYER
(N+4)-TH LAYER
(N+3)-TH LAYER
(N+2)-TH LAYER
(N+1)-TH LAYER
N-TH LAYER
Z DIRECTION
X DIRECTION

FIG. 20

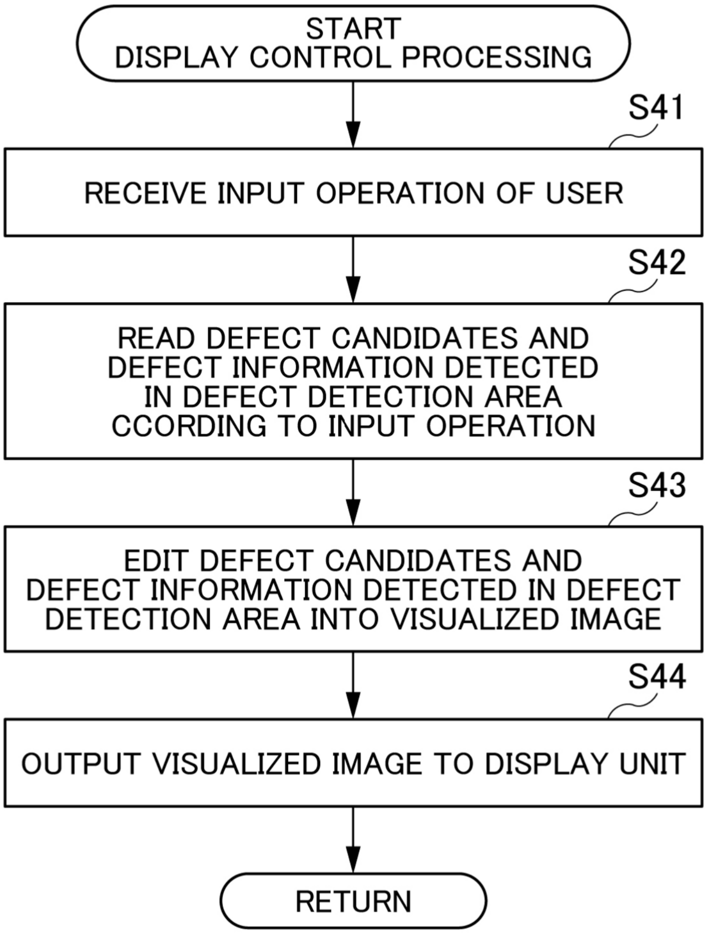
START
DISPLAY CONTROL PROCESSING
S41
RECEIVE INPUT OPERATION OF USER
S42
READ DEFECT CANDIDATES AND
DEFECT INFORMATION DETECTED
IN DEFECT DETECTION AREA
CCORDING TO INPUT OPERATION
S43
EDIT DEFECT CANDIDATES AND
DEFECT INFORMATION DETECTED IN DEFECT
DETECTION AREA INTO VISUALIZED IMAGE
S44
OUTPUT VISUALIZED IMAGE TO DISPLAY UNIT
RETURN

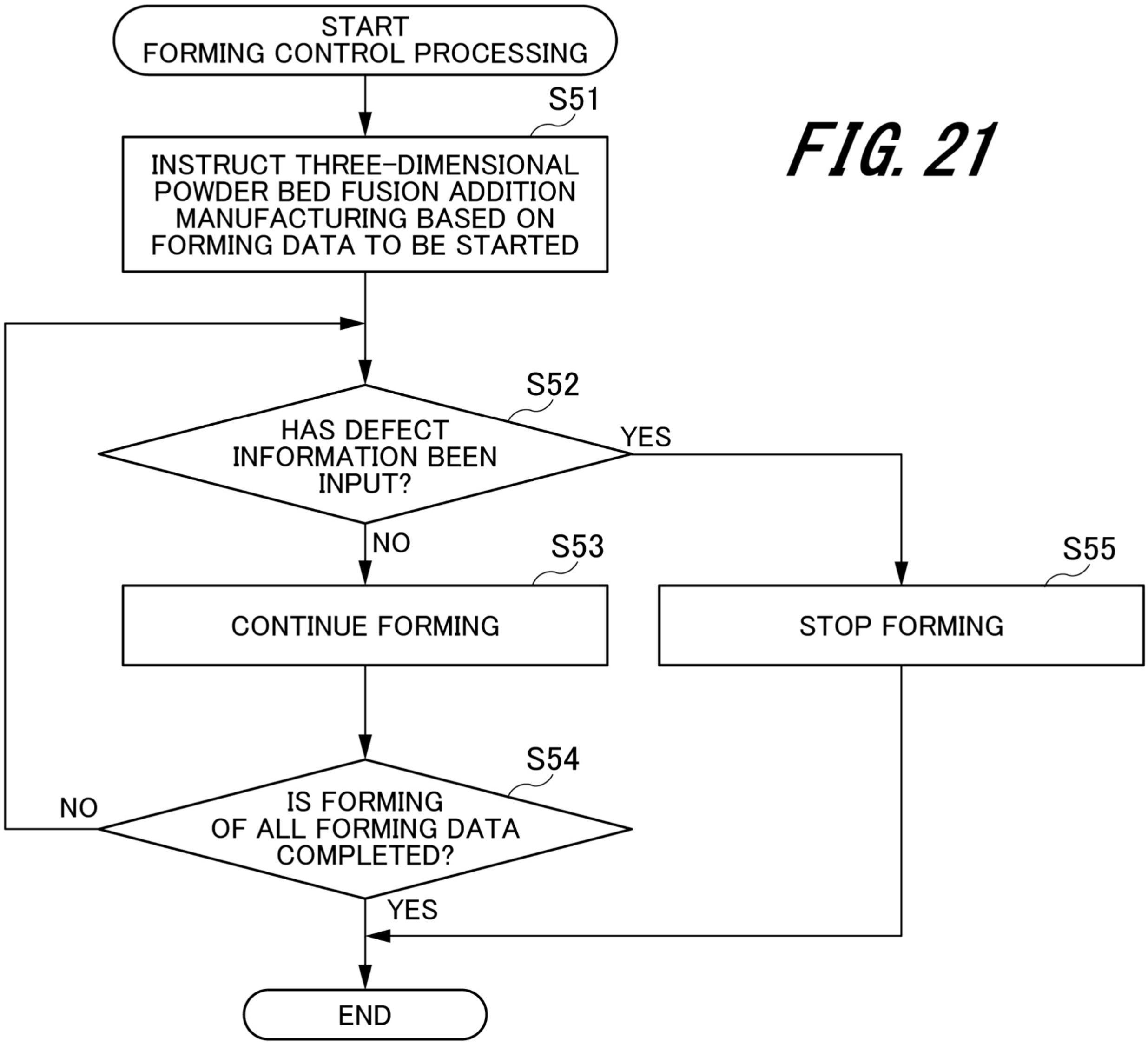
START
FORMING CONTROL PROCESSING
S51
INSTRUCT THREE-DIMENSIONAL POWDER BED FUSION ADDITION MANUFACTURING BASED ON FORMING DATA TO BE STARTED
S52
HAS DEFECT INFORMATION BEEN INPUT?
YES
NO
S53
CONTINUE FORMING
S55
STOP FORMING
S54
IS FORMING OF ALL FORMING DATA COMPLETED?
NO
YES
END

FIG. 21

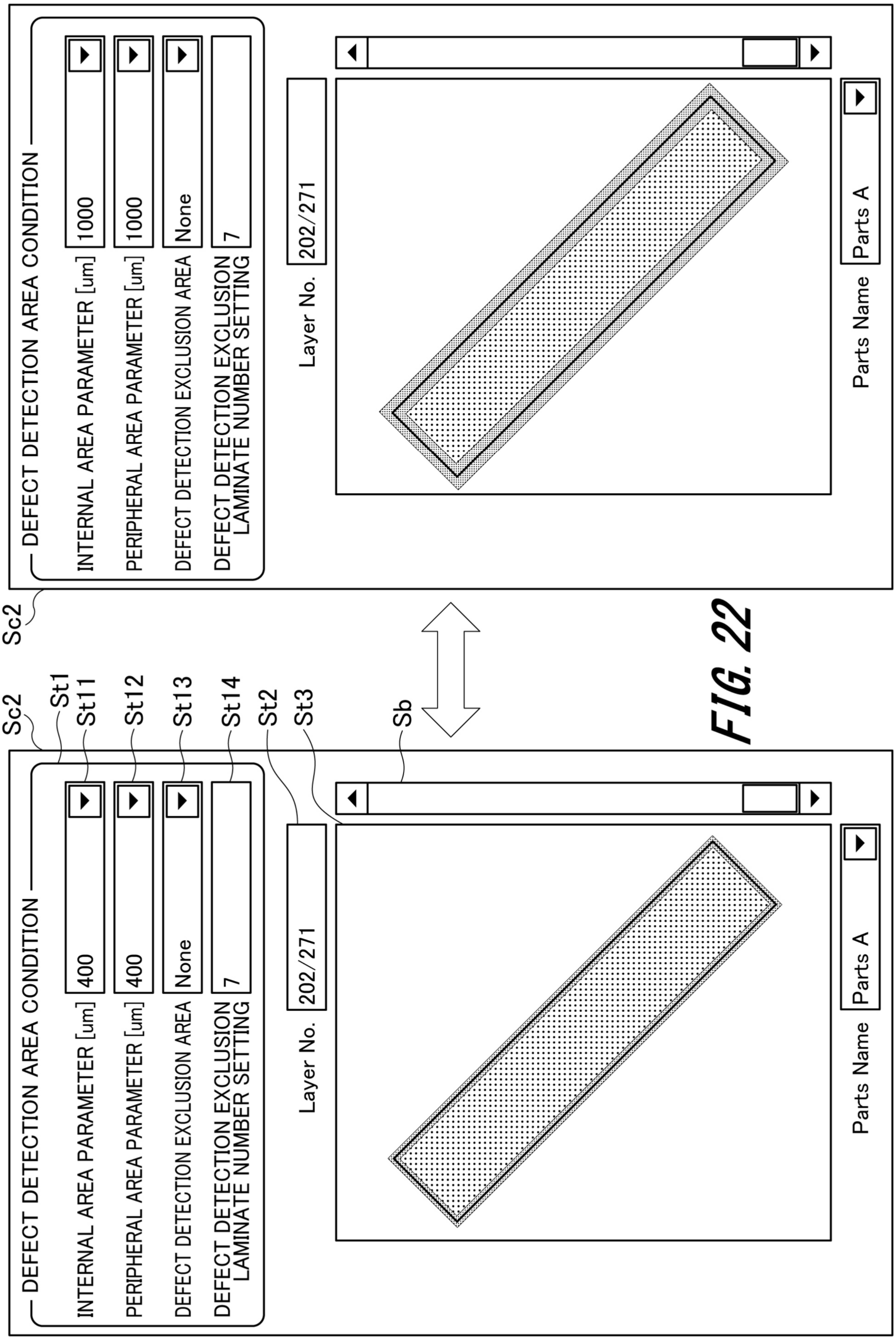
Sc2
St1
St11
St12
St13
St14
St2
St3
Sb
DEFECT DETECTION AREA CONDITION
INTERNAL AREA PARAMETER [um]
400
PERIPHERAL AREA PARAMETER [um]
400
DEFECT DETECTION EXCLUSION AREA
None
DEFECT DETECTION EXCLUSION LAMINATE NUMBER SETTING
7
Layer No.
202/271
Parts Name
Parts A
Sc2
DEFECT DETECTION AREA CONDITION
INTERNAL AREA PARAMETER [um]
1000
PERIPHERAL AREA PARAMETER [um]
1000
DEFECT DETECTION EXCLUSION AREA
None
DEFECT DETECTION EXCLUSION LAMINATE NUMBER SETTING
7
Layer No.
202/271
Parts Name
Parts A

FIG. 22

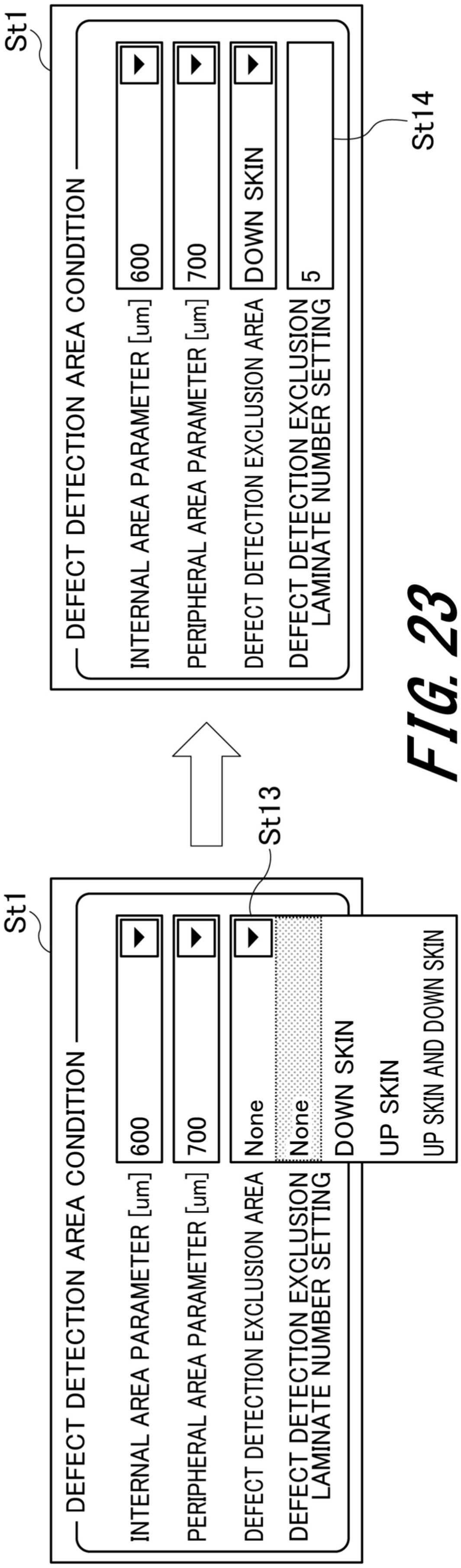
St1
DEFECT DETECTION AREA CONDITION
INTERNAL AREA PARAMETER [um]
600
PERIPHERAL AREA PARAMETER [um]
700
DEFECT DETECTION EXCLUSION AREA
None
DEFECT DETECTION EXCLUSION LAMINATE NUMBER SETTING
None
DOWN SKIN
UP SKIN
UP SKIN AND DOWN SKIN
St13
St1
DEFECT DETECTION AREA CONDITION
INTERNAL AREA PARAMETER [um]
600
PERIPHERAL AREA PARAMETER [um]
700
DEFECT DETECTION EXCLUSION AREA
DOWN SKIN
DEFECT DETECTION EXCLUSION LAMINATE NUMBER SETTING
5
St14

FIG. 23

FIG. 24

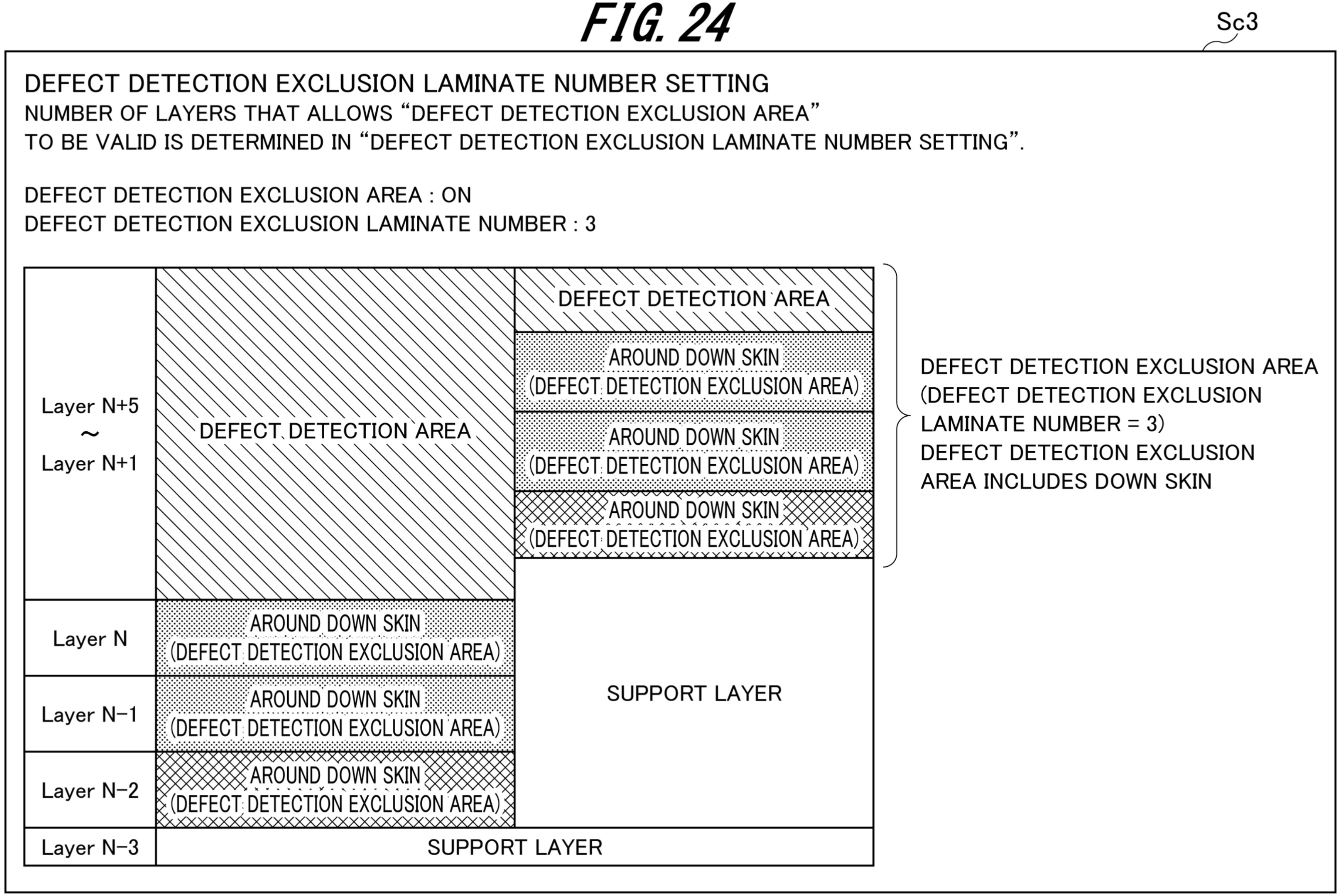
Sc3
DEFECT DETECTION EXCLUSION LAMINATE NUMBER SETTING
NUMBER OF LAYERS THAT ALLOWS “DEFECT DETECTION EXCLUSION AREA”
TO BE VALID IS DETERMINED IN “DEFECT DETECTION EXCLUSION LAMINATE NUMBER SETTING”.
DEFECT DETECTION EXCLUSION AREA : ON
DEFECT DETECTION EXCLUSION LAMINATE NUMBER : 3
Layer N+5
~
Layer N+1
DEFECT DETECTION AREA
DEFECT DETECTION AREA
AROUND DOWN SKIN
(DEFECT DETECTION EXCLUSION AREA)
AROUND DOWN SKIN
(DEFECT DETECTION EXCLUSION AREA)
AROUND DOWN SKIN
(DEFECT DETECTION EXCLUSION AREA)
DEFECT DETECTION EXCLUSION AREA
(DEFECT DETECTION EXCLUSION
LAMINATE NUMBER = 3)
DEFECT DETECTION EXCLUSION
AREA INCLUDES DOWN SKIN
Layer N
AROUND DOWN SKIN
(DEFECT DETECTION EXCLUSION AREA)
Layer N−1
AROUND DOWN SKIN
(DEFECT DETECTION EXCLUSION AREA)
Layer N−2
AROUND DOWN SKIN
(DEFECT DETECTION EXCLUSION AREA)
SUPPORT LAYER
Layer N−3
SUPPORT LAYER

Europäisches Patentamt
European Patent Office
Office européen des brevets

# EUROPEAN SEARCH REPORT

Application Number
EP 25 21 5367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | JP 2023 181933 A (HITACHI LTD) 25 December 2023 (2023-12-25)<br>* paragraphs [0016], [0018], [0032], [0047] - [0048], [0050] - [0051], [0061]; claims 1-15; figures 1-3,5-8 *<br>* paragraphs [0027] - [0028], [0054] *<br>----- | 1,9,10<br><br>2-8 | INV.<br>B22F10/28<br>B22F10/38<br>B22F10/85<br>B22F12/41<br>B22F12/90<br>B33Y10/00<br>B33Y30/00<br>B33Y50/02<br>G06T7/00<br>G06T7/174<br>G06T7/50<br><br>ADD.<br>B33Y50/00<br>B29C64/393<br>B29C64/153 |
| Y | J.-Y. JENG ET AL: "On Line Model Accuracy Inspection of Model Maker Rapid Prototyping Using Vision Technology", THE INTERNATIONAL JOURNAL OF ADVANCED MANUFACTURING TECHNOLOGY, vol. 17, no. 11, 9 May 2001 (2001-05-09), pages 825-834, XP055265944, London<br>ISSN: 0268-3768, DOI: 10.1007/s001700170110<br>* abstract; figures 9-10 *<br>----- | 2-5 | |
| Y | US 2023/249253 A1 (O'DOWD NIALL [US] ET AL) 10 August 2023 (2023-08-10)<br>* claims 1-14; figures 4,14,19-25 *<br>----- | 4-6 | TECHNICAL FIELDS SEARCHED (IPC) |
| Y | US 2022/324175 A1 (MORIMATSU DAISUKE [JP] ET AL) 13 October 2022 (2022-10-13)<br>* paragraph [0002]; claims 1-19,24; figures 2-5,8,12 *<br>* paragraphs [0061], [0086], [0131], [0135], [0136]; figure 5 *<br>* paragraphs [0076], [0087], [0-88], [0092] - [0093]; figure 4 *<br>* paragraphs [0116] - [0122]; figure 7 *<br>* paragraph [0172]; figure 12 *<br>----- | 7,8 | B22F<br>G06T<br>B33Y<br>G05B<br>B29C |

The present search report has been drawn up for all claims

1

| Place of search | Date of completion of the search | Examiner |
|---|---|---|
| The Hague | 27 March 2026 | Aliouane, Nadir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 21 5367

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | Publication date | Patent family member(s) | Publication date |
|---|---|---|---|
| JP 2023181933 A | 25-12-2023 | DE 112023000895 T5 | 05-12-2024 |
| | | JP 2023181933 A | 25-12-2023 |
| | | WO 2023243403 A1 | 21-12-2023 |
| US 2023249253 A1 | 10-08-2023 | EP 4217136 A1 | 02-08-2023 |
| | | JP 2024539526 A | 29-10-2024 |
| | | US 2023249253 A1 | 10-08-2023 |
| | | WO 2023059618 A1 | 13-04-2023 |
| US 2022324175 A1 | 13-10-2022 | CN 114450584 A | 06-05-2022 |
| | | DE 112020004392 T5 | 02-06-2022 |
| | | JP 7572362 B2 | 23-10-2024 |
| | | JP WO2021054127 A1 | 25-03-2021 |
| | | US 2022324175 A1 | 13-10-2022 |
| | | WO 2021054127 A1 | 25-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020200501 A